# FASCICULE DE BREVET EUROPEEN

(11) **EP 2 848 111 B1**
(45) Date de publication et mention de la délivrance du brevet: **29.03.2017**
(21) Numéro de dépôt: 14179723.3
(22) Date de dépôt: 04.08.2014
(51) Int. Cl.: A01D 43/10

(54) **Machine de récolte**
Erntemaschine
Harvesting machine

(30) Priorité: 23.08.2013 FR 1358166
(43) Date de publication de la demande: 18.03.2015
(73) Titulaire: KUHN S.A., 67700 Saverne (FR)
(72) Inventeur: Walch, Martin, 67490 Dettwiler (FR)

(56) Documents cités:
- FR-A1- 2 751 166
- US-A- 5 567 306

## Description

La présente invention se rapporte à une machine agricole pour la récolte de végétaux comportant :
- un châssis,
- au moins un mécanisme de récolte relié au châssis et comportant :
   ∘ un mécanisme de coupe comportant des organes de coupe destinés à couper des végétaux, et
   ∘ un dispositif de conditionnement comportant des premier et deuxième organes de conditionnement contrarotatifs susceptibles de s'éloigner l'un de l'autre et entre lesquels sont destinés à passer les végétaux coupés par les organes de coupe en vue de leur traitement,
- un mécanisme de transmission destiné à assurer l'animation des organes de coupe et des premier et deuxième organes de conditionnement, et comportant :
   ∘ un boîtier primaire comportant :
      ▪ un carter primaire délimitant un volume intérieur primaire,
      ▪ un arbre d'entrée prévu pour être mis en mouvement à partir d'une source motrice,
      ▪ une première sortie primaire reliée au mécanisme de coupe,
      ▪ une deuxième sortie primaire reliée au premier organe de conditionnement,
      ▪ une troisième sortie primaire,
      ▪ des moyens de transmission de couple primaires reliant entre eux l'arbre d'entrée, la première sortie primaire, la deuxième sortie primaire et la troisième sortie primaire, et logés au sein du carter primaire,
   ∘ un boîtier secondaire comportant :
      ▪ un carter secondaire délimitant un volume intérieur secondaire,
      ▪ une entrée secondaire reliée à la troisième sortie primaire,
      ▪ une sortie secondaire reliée au deuxième organe de conditionnement,
      ▪ des moyens de transmission de couple secondaires reliant entre eux l'entrée secondaire et la sortie secondaire, et logés au sein du carter secondaire,
   ∘ un dispositif de lubrification du boîtier primaire comportant :
      ▪ un lubrifiant fluide,
      ▪ une pompe aspirant le lubrifiant contenu dans le boîtier primaire,
      ▪ un réseau de distribution primaire communiquant avec le volume intérieur primaire et alimenté en lubrifiant par la pompe, au moyen duquel réseau de distribution primaire le lubrifiant est distribué vers une partie au moins des moyens de transmission de couple primaires.

Une telle machine est connue du document FR 2 751 166 A1. Cette machine comporte un mécanisme de récolte qui se compose d'un bâti portant un mécanisme de coupe à l'arrière duquel s'étendent deux paires d'organes de conditionnement contrarotatifs. Les organes de conditionnement d'une paire sont situés l'un au-dessus de l'autre. L'un d'eux, en l'occurrence l'organe de conditionnement inférieur, est animé autour d'un axe de rotation fixe par rapport au mécanisme de coupe, tandis que l'organe de conditionnement supérieur est monté sur un axe de rotation déplaçable par rapport au mécanisme de coupe de sorte à pouvoir laisser passer un volume variable de végétaux fauchés. Entre ces deux paires d'organes de conditionnement s'étend, de manière sensiblement centrale au sein du mécanisme de récolte, un boîtier primaire. Ce boîtier primaire assure l'animation d'une part du mécanisme de coupe, au moyen d'une première sortie primaire placée à l'avant du boîtier primaire, d'autre part de chaque organe de conditionnement inférieur, au moyen d'une deuxième sortie primaire respective. Chaque organe de conditionnement supérieur est animé à partir d'un boîtier secondaire respectif monté à pivotement sur une extrémité latérale respective du mécanisme de récolte. A cette fin, chaque boîtier secondaire comporte d'une part une entrée secondaire reliée, au moyen d'un arbre de transmission s'étendant sur toute la largeur de travail de l'organe de conditionnement supérieur correspondant, à une troisième sortie primaire respective du boîtier primaire, et d'autre part une sortie secondaire reliée audit organe de conditionnement supérieur. Il est par ailleurs prévu un dispositif de lubrification du boîtier primaire fonctionnant avec un lubrifiant fluide tel que de l'huile. Ce lubrifiant est en partie mis en mouvement au moyen d'une pompe logée dans le boîtier primaire. Cette pompe est reliée à un réseau de distribution primaire formé par un canal, notamment un tuyau, communiquant avec une extrémité supérieure du boîtier primaire afin de lubrifier, par circulation du lubrifiant en circuit fermé au sein du boîtier primaire, les moyens de transmission de couples primaires contenus dans le boîtier primaire et s'étendant sur la hauteur de celui-ci, formés notamment par des engrenages, des arbres et des paliers. Le boîtier secondaire est un boîtier sensiblement étanche qui ne communique pas avec le boîtier primaire et qui contient également un lubrifiant afin de lubrifier les moyens de transmission de couple secondaires contenus dans le boîtier secondaire.

Cette lubrification du boîtier secondaire distincte de celle du boîtier primaire présente un certain nombre d'inconvénients.

Les opérations périodiques de vérification de la quantité et/ou de remplacement du lubrifiant sont doublées, puisque requises pour chaque boîtier. Cette multiplicité des opérations de maintenance est fastidieuse pour l'utilisateur, augmente le temps d'immobilisation de la machine, et accroît le risque d'omettre, ou de négliger, la maintenance de l'un des boîtiers.

Par ailleurs, le lubrifiant contenu dans le boîtier secondaire est confiné à l'intérieur du volume intérieur de ce boîtier secondaire, ce volume intérieur est cependant de petite taille. L'encombrement du boîtier secondaire est en effet grandement dicté par la distance entre l'axe de rotation de l'organe de conditionnement supérieur d'une part, et l'arbre de transmission relié au boîtier primaire d'autre part. Afin de limiter l'encombrement du mécanisme de récolte, notamment en hauteur, cette distance est assez faible, il s'ensuit un entraxe réduit entre l'entrée secondaire et la sortie secondaire du boîtier secondaire. L'encombrement de ce dernier est également limité, dans sa partie inférieure, par la présence toute proche des moyens de montage à rotation de l'organe de conditionnement inférieur sur le bâti du mécanisme de récolte. Ces diverses contraintes géométriques réduisent fortement la taille du boîtier secondaire et donc la surface d'échange thermique vers l'air ambiant à travers ses parois. Le boîtier secondaire dans son ensemble, et le lubrifiant qu'il contient, sont donc susceptibles d'être soumis à un échauffement important pendant le travail de la machine. De plus, dans le cas d'un lubrifiant fluide dans lequel baignent en partie les moyens de transmission de couple secondaires, ces contraintes géométriques diminuent le volume intérieur du boîtier secondaire au sein duquel ce lubrifiant peut se répartir, et notamment l'espace entre les moyens de transmission de couple secondaires et les parois du boîtier secondaire. Se pose dès lors un compromis délicat à solutionner, entre d'une part une quantité importante de lubrifiant en vue d'assurer un approvisionnement suffisant en lubrifiant des moyens de transmission de couple secondaires baignant en partie dans ce lubrifiant, ce volume important de lubrifiant dans lequel les moyens de transmission de couple secondaires barbotent lors de leur mouvement pouvant néanmoins générer un échauffement excessif et une dégradation accélérée du lubrifiant par cisaillement et frottement, et d'autre part une quantité réduite de lubrifiant, qui peut néanmoins se traduire par une lubrification insuffisante dans certaines conditions. Par ailleurs, un lubrifiant fluide confiné à l'intérieur du boîtier secondaire est projeté sur les parois internes dudit boîtier par les moyens de transmission de couple secondaires en rotation. Ce phénomène est susceptible de générer un défaut de lubrification de ces moyens de transmission, car le lubrifiant peut se répartir, pour l'essentiel, sur les parois internes et non sur les moyens de transmission de couple secondaires. Le problème de l'apport en lubrifiant aux moyens de transmission de couple secondaires, ainsi que de l'échauffement du lubrifiant et du boîtier secondaire, se pose avec acuité sur une machine de récolte ayant une grande largeur de travail et soumise à de strictes réglementations dictant un encombrement réduit au transport. La grande largeur de travail impose des organes de conditionnement volumineux et lourds, et entre lesquels passe un flux important de végétaux fauchés. Ceci se traduit par une puissance mécanique accrue que doit transmettre le boîtier secondaire vers l'organe de conditionnement correspondant. Entre le volume occupé par ces organes de conditionnement, et l'encombrement global de la machine en partie fixé par le législateur, notamment dans le sens de la largeur, l'espace restant disponible pour le carter secondaire est réduit. En sus, à l'intérieur de ce dernier, des moyens de transmission de couple secondaires dimensionnés à la hausse afin de résister aux efforts mécaniques accrus, tendent à réduire le volume disponible pour le lubrifiant. Il devient dès lors difficile d'assurer une lubrification et un refroidissement convenables du boîtier secondaire dans son ensemble.

La présente invention a pour but de proposer une machine agricole pour la récolte de végétaux qui ne présente pas les inconvénients précités.

A cet effet, une importante caractéristique de l'invention consiste en ce que le dispositif de lubrification comporte d'une part un réseau de distribution secondaire, qui communique avec le volume intérieur secondaire et est alimenté en lubrifiant, directement ou indirectement, par la pompe, au moyen duquel réseau de distribution secondaire le lubrifiant est distribué vers une partie au moins des moyens de transmission de couple secondaires, et d'autre part un réseau de retour du lubrifiant contenu dans le boîtier secondaire, qui communique avec le volume intérieur secondaire et est destiné à renvoyer, directement ou indirectement, ce lubrifiant vers la pompe.

Le boîtier primaire et le boîtier secondaire partagent ainsi le même lubrifiant dont la circulation est assurée à l'intérieur de chacun de ces boîtiers au moyen de la pompe reliée aux réseaux de distribution primaire et secondaire, ainsi qu'au réseau de retour. Plusieurs avantages résultent de cette conception. D'une part, les opérations périodiques de vérification de la quantité et de remplacement du lubrifiant sont simplifiées. En effet, un seul niveau de lubrifiant doit être établi, et vérifié de temps à autre, pour les deux boîtiers. De plus, la vidange du lubrifiant est réalisée simultanément pour les deux boîtiers. D'autre part, comme le lubrifiant circulant dans le boîtier secondaire circule également dans le boîtier primaire, le lubrifiant présent dans le boîtier secondaire est mieux refroidi. Il en est de même des moyens de transmission de couple secondaires qui sont donc mieux à même de transmettre une puissance mécanique importante. Le niveau de lubrifiant peut être établi de sorte qu'un volume global relativement important de lubrifiant soit disponible pour assurer un approvisionnement adéquat en lubrifiant des moyens de transmission de couple primaires et secondaires. Pour autant, le risque de voir ce lubrifiant se dégrader prématurément par échauffement et cisaillement mécanique, est fort réduit car, pendant le fonctionnement de la machine, le lubrifiant ne stationne pas à l'intérieur des boîtiers primaire et secondaire, mais au contraire y circule en permanence. La lubrification du boîtier secondaire par circulation du lubrifiant, permet de concevoir un boîtier secondaire de dimensions réduites. Ceci autorise à aménager, au sein d'une machine dont l'encombrement au transport demeure réduit, des organes de conditionnement ayant une largeur de travail importante, en vue d'assurer un traitement optimal des végétaux fauchés.

D'autres caractéristiques et avantages de l'invention ressortiront de la description ci-après avec référence aux dessins annexés qui représentent une forme non limitative de réalisation de la machine selon l'invention.

Sur ces dessins :
- la figure 1 représente une vue de côté d'une forme de réalisation d'une machine selon l'invention attelée à un tracteur ;
- la figure 2 représente une vue de dessus de la forme de réalisation de la figure 1 ;
- la figure 3 représente une vue de côté d'un mécanisme de transmission équipant la forme de réalisation des figures 1 et 2 ;
- la figure 4 représente une vue depuis l'arrière du mécanisme de transmission de la figure 3 ;
- la figure 5 représente une vue depuis l'avant du mécanisme de transmission suivant la coupe V-V de la figure 3 ;
- la figure 6 représente une vue de côté du mécanisme de transmission suivant la coupe VI-VI de la figure 4 ;
- la figure 7 représente une vue de côté du mécanisme de transmission suivant la coupe VII-VII de la figure 4 ;
- la figure 8 représente une vue depuis l'arrière du mécanisme de transmission suivant la coupe brisée VIII-VIII de la figure 3.

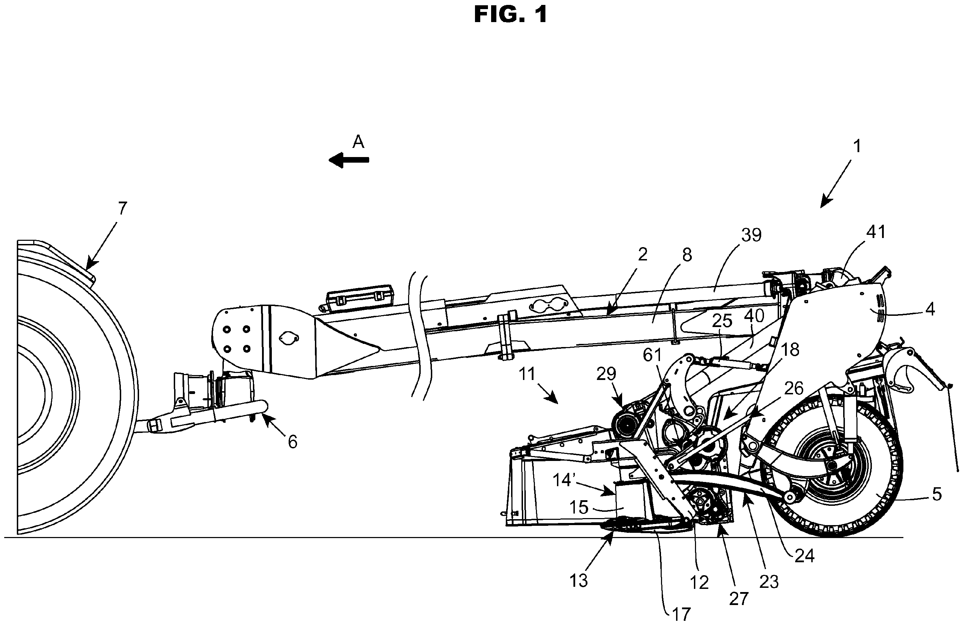

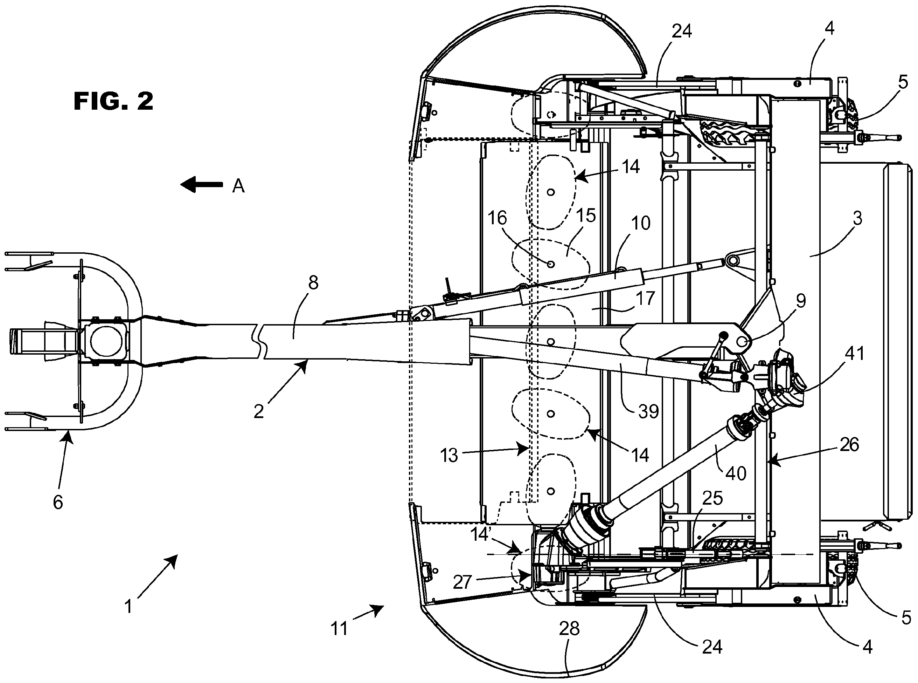

Telle qu'elle est représentée sur les figures 1 et 2, la machine selon l'invention est une machine (1) agricole pour la récolte de végétaux, en particulier de fourrage. La machine (1) comporte un châssis (2) possédant notamment une poutre transversale (3). Le châssis (2) comporte également deux montants latéraux (4). Chaque montant latéral (4) est muni d'au moins une roue (5) au sol. Le châssis (2) comporte un dispositif d'attelage (6) permettant d'accoupler le châssis (2) à un tracteur (7), représenté à la figure 1, pour déplacer la machine (1) dans une direction d'avancement (A) et pour animer les différents organes de la machine (1). Dans la suite de la description, les notions « avant », « arrière » et « frontal » sont définies par référence à cette direction d'avancement (A), et les notions « horizontal », « vertical », « transversal », « dessus », « dessous », « haut », « bas », « supérieur » et « inférieur » se rapportent à la machine (1) en situation de travail. Dans la forme de réalisation des figures, le dispositif d'attelage (6) est placé au niveau d'une extrémité frontale du châssis (2). Le châssis (2) comporte un moyen de liaison (8) tel un timon. Ce moyen de liaison (8) relie la poutre transversale (3) au dispositif d'attelage (6). Ce moyen de liaison (8) est articulé sur un axe sensiblement vertical (9) du châssis (2). Ce moyen de liaison (8) est déplaçable autour de cet axe (9) à l'aide d'un vérin hydraulique (10). Celui-ci est lui-même articulé sur le châssis (2) et le moyen de liaison (8).

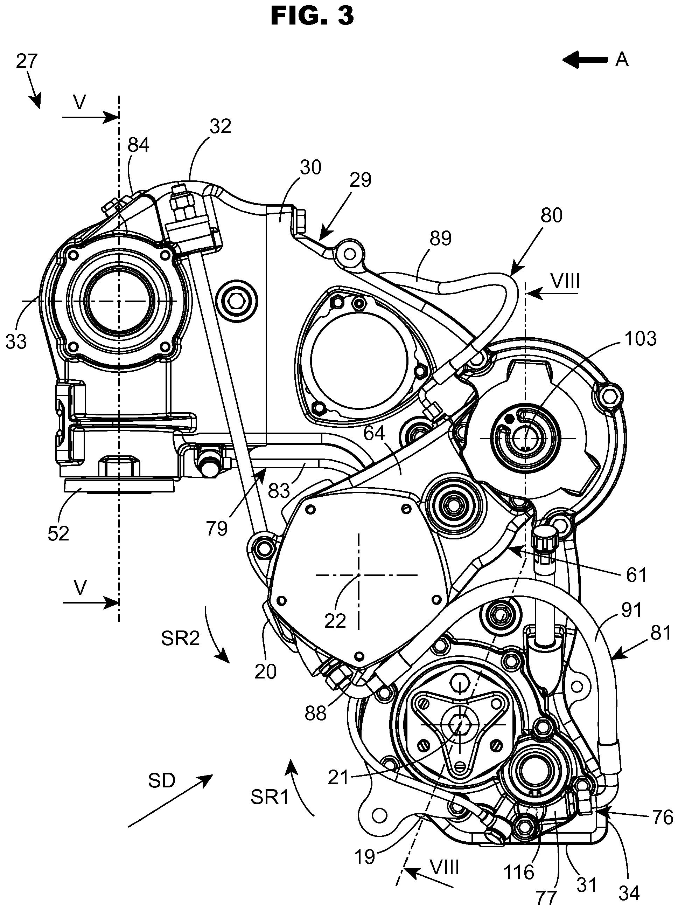

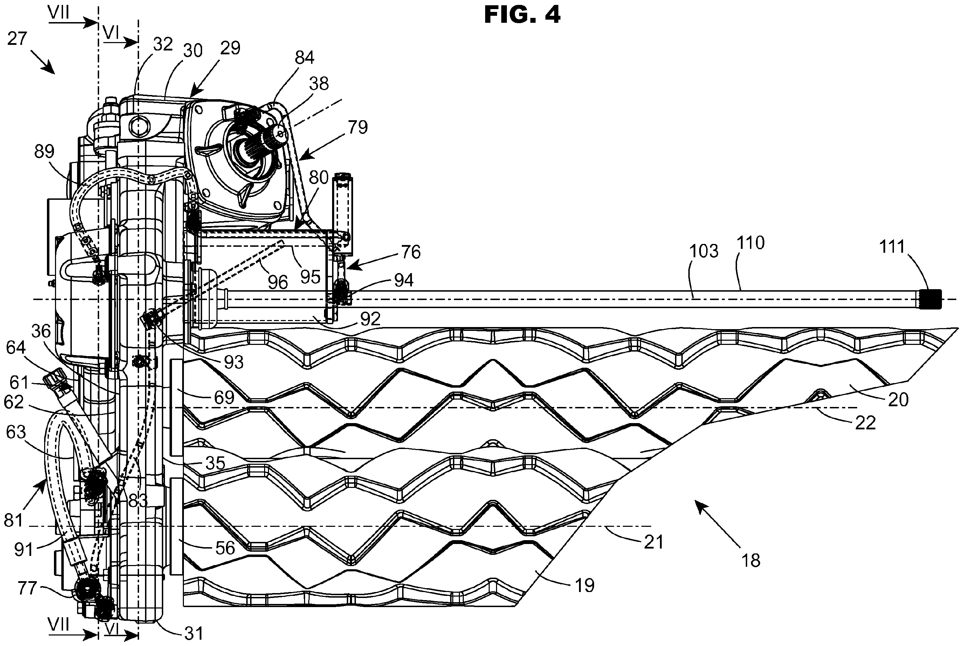

Le châssis (2) porte un mécanisme de récolte (11). Le mécanisme de récolte (11) comporte un bâti (12) portant un mécanisme de coupe (13). Le mécanisme de coupe (13) comporte des organes de coupe (14, 14') destinés à couper les végétaux. Les organes de coupe (14, 14') sont par exemple des rotors de coupe (15) pouvant tourner autour d'axes de rotation (16) qui, pendant le travail, sont sensiblement verticaux ou légèrement inclinés vers l'avant. Ces rotors de coupe (15) sont formés par des disques ou des tambours munis de couteaux qui s'étendent au-delà de la périphérie desdits disques ou tambours. Les organes de coupe (14, 14') sont montés sur des paliers disposés à intervalles plus ou moins réguliers sur une barre de coupe (17), et sont, en fonctionnement, portés en rotation rapide au moyen d'un train de pignons incorporés dans un carter étanche contenant un lubrifiant tel que de l'huile. En étant mis en rotation, les couteaux viennent alors sectionner les végétaux s'élevant au-dessus du sol, tels que de l'herbe ou d'autres plantes fourragères. Le carter de la barre de coupe (17) se présente sous la forme d'un parallélépipède allongé. Le mécanisme de récolte (11) comporte également un dispositif de conditionnement (18). Ce dernier est placé en arrière du mécanisme de coupe (13). Le dispositif de conditionnement (18) comporte des premier et deuxième organes de conditionnement (19 et 20) contrarotatifs, susceptibles de s'éloigner l'un de l'autre et entre lesquels sont destinés à passer les végétaux coupés par les organes de coupe (14, 14'), en vue de leur traitement, pour être finalement éjectés vers l'arrière de la machine (1). Entre le mécanisme de coupe (13) et le dispositif de conditionnement (18), les végétaux fauchés suivent un sens de déplacement (SD) indiqué par la flèche correspondante à la figure 3. Selon la forme de réalisation représentée, et ainsi qu'il ressort des figures 3 et 4, l'organe de conditionnement (19, 20) est un rouleau s'étendant sensiblement horizontalement et sensiblement perpendiculairement à la direction d'avancement (A). Il comporte à sa périphérie des nervures destinées à collaborer avec des échancrures du rouleau voisin. Le premier organe de conditionnement (19) est monté sur un premier axe de rotation (21) fixe par rapport au mécanisme de coupe (13). Pendant le travail, le premier organe de conditionnement (19) est animé autour de ce premier axe de rotation (21) dans un premier sens de rotation (SR1) indiqué par la flèche correspondante à la figure 3. Le deuxième organe de conditionnement (20) est situé sensiblement au-dessus du premier organe de conditionnement (19) et quelque peu en avant par rapport à ce dernier. Ce deuxième organe de conditionnement (20) est monté sur un deuxième axe de rotation (22). Pendant le travail, le deuxième organe de conditionnement (20) est animé autour de ce deuxième axe de rotation (22) dans un deuxième sens de rotation (SR2), contraire au premier sens de rotation (SR1) et indiqué par la flèche correspondante à la figure 3. Le deuxième axe de rotation (22) est mobile par rapport au mécanisme de coupe (13) et par rapport au premier organe de conditionnement (19). De la sorte, la distance séparant ces premier et deuxième axes de rotation (21 et 22) peut varier en fonction du volume de végétaux passant entre les premier et deuxième organes de conditionnement (19 et 20).

Le mécanisme de récolte (11) est relié au châssis (2) par l'intermédiaire d'un dispositif de suspension (23) autorisant un déplacement en hauteur du mécanisme de récolte (11) par rapport au châssis (2). Ainsi qu'il ressort des figures 1 et 2, ce dispositif de suspension (23) se compose de deux bielles inférieures (24) et d'au moins une bielle supérieure (25). Les bielles inférieures (24) se situent sur les côtés latéraux de la machine (1) et sont articulées sur le mécanisme de récolte (11) et sur le châssis (2) au moyen d'axes respectifs. La bielle supérieure (25) est plus éloignée du sol que les bielles inférieures (24) et est articulée sur le mécanisme de récolte (11) et sur le châssis (2) au moyen d'axes respectifs. Ces axes sont tous sensiblement horizontaux et sensiblement perpendiculaires à la direction d'avancement (A).

La machine (1) selon l'invention comporte aussi un dispositif d'allégement (26) du mécanisme de récolte (11), visible de manière partielle sur la figure 2. Ce dispositif d'allégement (26) est constitué par deux barres de torsion qui sont reliées à la poutre transversale (3). Chacune de ces barres de torsion s'étend du milieu de la machine (1) jusqu'à un des montants latéraux (4) du châssis (2) et porte à son extrémité latérale un mécanisme qui est dirigé vers le mécanisme de récolte (11) et qui est articulé au moyen d'un axe sur la bielle inférieure (24) du dispositif de suspension (23). Les deux barres de torsion assurent l'allégement du mécanisme de récolte (11) par ses deux côtés.

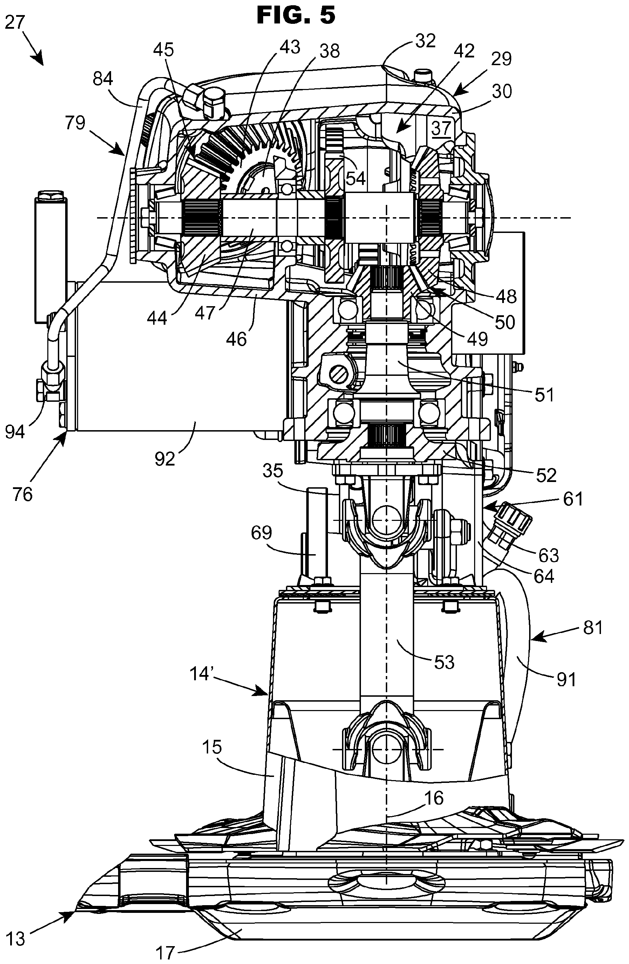

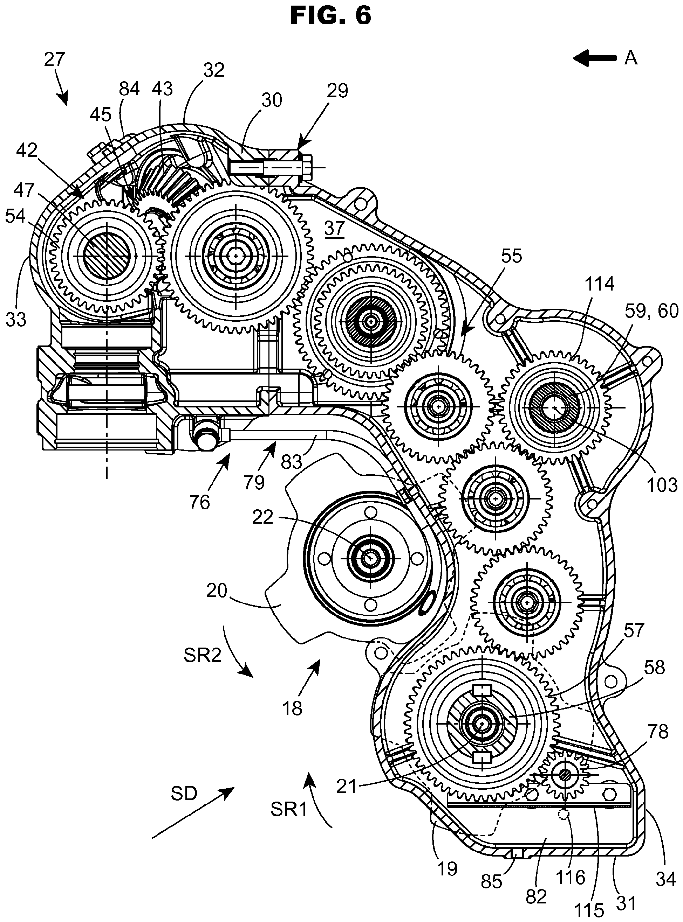

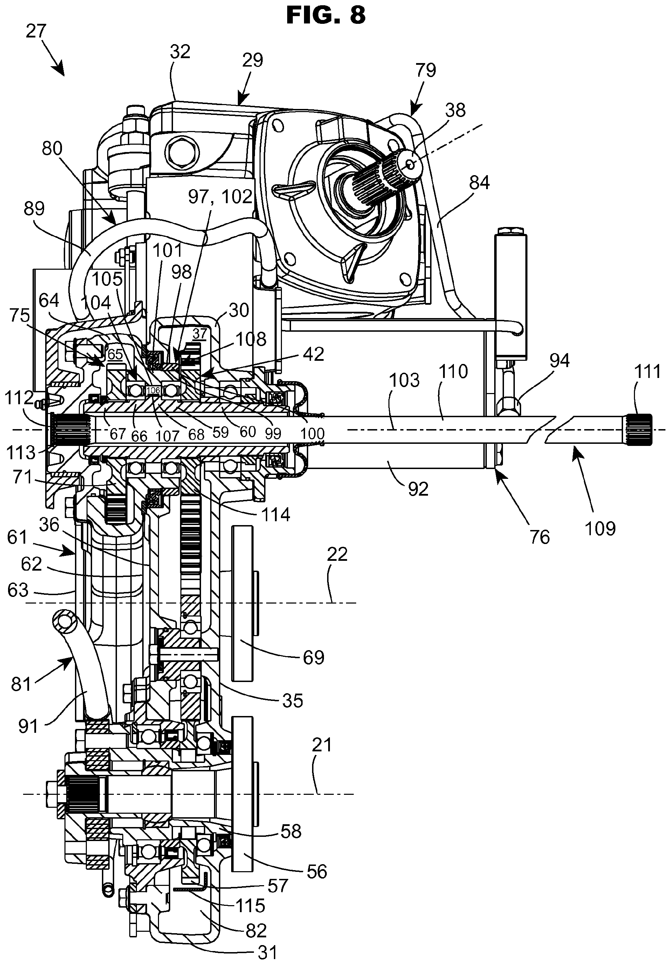

La machine (1) comporte également un mécanisme de transmission (27) destiné à assurer l'animation des organes de coupe (14, 14') et des premier et deuxième organes de conditionnement (19 et 20). Selon la forme de réalisation représentée à la figure 2, le mécanisme de transmission (27) se situe à proximité d'une extrémité latérale (28) du mécanisme de récolte (11). Le mécanisme de transmission (27) comporte un boîtier primaire (29) représenté à plus grande échelle à la figure 3. Le boîtier primaire (29) comporte tout d'abord un carter primaire (30). Ce carter primaire (30) est, du moins en grande partie, une pièce de fonderie creuse. Le carter primaire (30) s'étend verticalement entre une extrémité primaire inférieure (31) et une extrémité primaire supérieure (32). L'extrémité primaire inférieure (31) délimite le carter primaire (30) par le bas. L'extrémité primaire supérieure (32) délimite le carter primaire (30) par le haut. De plus, le carter primaire (30) s'étend horizontalement et dans la direction d'avancement (A), entre une extrémité primaire avant (33) et une extrémité primaire arrière (34). Ainsi qu'il apparaît à la figure 4 montrant le carter primaire (30) de l'arrière, ce dernier s'étend horizontalement et perpendiculairement à la direction d'avancement (A), en majeure partie entre un côté primaire intérieur (35) voisin des organes de conditionnement (19 et 20), et un côté primaire extérieur (36) distant desdits organes de conditionnement (19 et 20). Les parois de ce carter primaire (30) délimitent un volume intérieur primaire (37) qui est indiqué sur les vues en coupe des figures 5 et 6 montrant l'intérieur du boîtier primaire (29). Tel que représenté à la figure 5, le boîtier primaire (29) comporte un arbre d'entrée (38) prévu pour être mis en mouvement à partir d'une source motrice. L'arbre d'entrée (38) est situé à proximité de l'extrémité primaire supérieure (32). Il est de plus disposé quelque peu en arrière de l'extrémité primaire avant (33). Selon la forme de réalisation des figures, l'arbre d'entrée (38) est mis en mouvement à partir d'une prise de force du tracteur (7). L'animation de l'arbre d'entrée (38) sera mieux comprise à l'examen de la figure 2. La prise de force du tracteur (7) peut être reliée à un premier arbre de transmission (39). Celui-ci s'étend suivant une longueur du moyen de liaison (8). Ce premier arbre de transmission (39) est relié à un deuxième arbre de transmission (40) au moyen d'un boîtier de renvoi (41). Le boîtier de renvoi (41) est porté par la poutre transversale (3) du châssis (2). Le boîtier de renvoi (41) est par exemple placé à proximité de l'axe (9) sensiblement vertical d'articulation du moyen de liaison (8). Le deuxième arbre de transmission (40) s'étend, depuis le boîtier de renvoi (41), vers l'avant. Il s'étend également vers le bas et vers l'extrémité latérale (28) du mécanisme de récolte (11) où se situe le mécanisme de transmission (27). A cet endroit, le deuxième arbre de transmission (40) est relié à l'arbre d'entrée (38) du boîtier primaire (29). Entre le premier arbre de transmission (39) et le boîtier de renvoi (41) est prévu un joint universel tel un cardan. Il en est de même entre le boîtier de renvoi (41) et le deuxième arbre de transmission (40). La liaison entre ce dernier et l'arbre d'entrée (38) est également opérée par un joint universel. A l'examen des figures 5 et 6, il apparaît que le boîtier primaire (29) comporte des moyens de transmission de couple primaires (42). Ces derniers comportent notamment une roue dentée d'entrée (43), menante, qui engrène avec un pignon d'entrée (44) mené. La roue dentée d'entrée (43) est portée par l'arbre d'entrée (38). Cette roue dentée d'entrée (43) et ce pignon d'entrée (44) tournent dans des plans distincts disposés obliquement l'un par rapport à l'autre, de manière à former un renvoi d'angle d'entrée (45). Ce renvoi d'angle d'entrée (45) est situé sensiblement en-dessous de l'extrémité primaire supérieure (32), et immédiatement à l'arrière de l'extrémité primaire avant (33). Le renvoi d'angle d'entrée (45) est par ailleurs logé au sein d'un renflement (46) du carter primaire (30). Ce renflement (46) s'étend en projection depuis le côté primaire intérieur (35), par-dessus le mécanisme de récolte (11). Ce renflement (46) délimite une cavité faisant partie du volume intérieur primaire (37). Le pignon d'entrée (44) est porté par un arbre intermédiaire (47) qui s'étend sensiblement horizontalement et sensiblement transversalement. Cet arbre intermédiaire (47) porte une roue dentée primaire (48) qui entraîne un pignon primaire (49). Cette roue dentée primaire (48) et ce pignon primaire (49) tournent dans des plans sensiblement perpendiculaires entre eux, de manière à former un renvoi d'angle primaire (50). Le pignon primaire (49) se situe à l'extrémité supérieure d'un premier arbre (51) qui s'étend vers le bas en direction du mécanisme de coupe (13) représenté partiellement au bas de la figure 5. L'extrémité inférieure du premier arbre (51) forme une première sortie primaire (52) du boîtier primaire (29). Cette première sortie primaire (52) est reliée au mécanisme de coupe (13) qui est situé en-dessous d'elle. A cette fin, la première sortie primaire (52) comporte un accouplement au moyen duquel elle est reliée à l'organe de coupe (14') de la figure 5, placé à proximité de l'extrémité latérale (28) correspondante du mécanisme de récolte (11). La liaison entre la première sortie primaire (52) et cet organe de coupe (14') est opérée par un arbre à joints universels (53). En l'occurrence, la première sortie primaire (52) est reliée à l'organe de coupe (14') le plus proche de ladite extrémité latérale (28). Cet organe de coupe (14') transmet ensuite son mouvement de rotation aux autres organes de coupe (14) via le train de pignons incorporé dans le carter de la barre de coupe (17). Ainsi qu'il ressort encore de la figure 5, l'arbre intermédiaire (47) porte, entre le pignon d'entrée (44) et la roue dentée primaire (48), une roue dentée (54). Celle-ci engrène avec une succession de moyens d'engrènement primaires (55), illustrés à la figure 6, constitués par une cascade de roues dentées s'étendant vers l'arrière et vers le bas du boîtier primaire (29). Ces moyens d'engrènement primaires (55) s'étendent vers l'arrière presque jusque au niveau de l'extrémité primaire arrière (34), et sensiblement entre l'extrémité primaire inférieure (31) et l'extrémité primaire supérieure (32). Par l'intermédiaire de ces moyens d'engrènement primaires (55), la roue dentée (54) entraîne une deuxième sortie primaire (56), représentée notamment à la figure 4, reliée au premier organe de conditionnement (19). A cette fin, les moyens d'engrènement primaires (55) de la figure 6 comportent une roue dentée terminale (57) située au-dessus de l'extrémité primaire inférieure (31). Cette roue dentée terminale (57) est portée par un deuxième arbre (58) lié à la deuxième sortie primaire (56), suivant un agencement illustré plus en détail à la figure 8. La deuxième sortie primaire (56) émerge du carter primaire (30), du côté primaire intérieur (35) de celui-ci. Elle est située quelque peu au-dessus de l'extrémité primaire inférieure (31). La deuxième sortie primaire (56) comporte un accouplement au moyen duquel elle est reliée directement au premier organe de conditionnement (19). Les moyens d'engrènement primaires (55) sont également reliés à une troisième sortie primaire (59) du boîtier primaire (29), dont l'agencement sera mieux compris à l'examen des figures 6 et 8. Cette troisième sortie primaire (59) est liée à un troisième arbre (60) et débouche sur le côté primaire extérieur (36) du carter primaire (30), en vue d'animer le deuxième organe de conditionnement (20) par des moyens qui seront décrits par la suite. Le troisième arbre (60) porte, en vue d'être animé en rotation, une roue dentée (114) faisant partie des moyens d'engrènement primaires (55). Le renvoi d'angle d'entrée (45), le renvoi d'angle primaire (50), la roue dentée (54) et les moyens d'engrènement primaires (55) qu'elle anime, ainsi que les différents arbres (38, 47, 51, 58 et 60) et les paliers correspondants, forment les moyens de transmission de couple primaires (42). Ces derniers sont donc des moyens de transmission de couple par engrènement. Ces moyens de transmission de couple primaires (42) logés au sein du carter primaire (30) relient entre eux, de manière synchronisée, l'arbre d'entrée (38), la première sortie primaire (52), la deuxième sortie primaire (56) et la troisième sortie primaire (59).

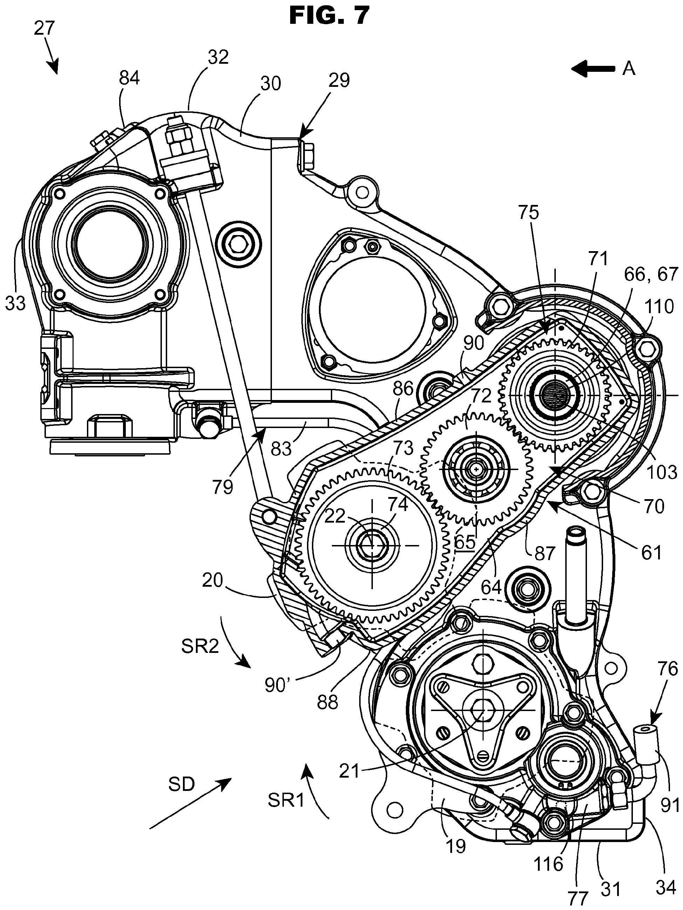

Le mécanisme de transmission (27) comporte également un boîtier secondaire (61) représenté de l'extérieur aux figures 3 et 4, et dont l'intérieur est notamment illustré à la figure 7. Suivant une direction horizontale et perpendiculaire à la direction d'avancement (A), le boîtier secondaire (61) s'étend pour l'essentiel entre un côté secondaire intérieur (62) voisin du côté primaire extérieur (36), et un côté secondaire extérieur (63) sensiblement parallèle au côté secondaire intérieur (62) et distant de celui-ci. Le boîtier secondaire (61) est relié au boîtier primaire (29) du côté primaire extérieur (36) de celui-ci. Le boîtier secondaire (61) s'étend en grande partie à côté du boîtier primaire (29). Le boîtier secondaire (61) comporte un carter secondaire (64) dont les parois délimitent un volume intérieur secondaire (65). Le boîtier secondaire (61) comporte également une entrée secondaire (66) formée par un quatrième arbre (67). Cette dernière est reliée à la troisième sortie primaire (59). A cette fin, et ainsi qu'il ressort de la figure 8, est prévu un arbre de transmission (68) reliant entre elles la troisième sortie primaire (59) et l'entrée secondaire (66). Cet arbre de transmission (68) s'étend sensiblement horizontalement et sensiblement perpendiculairement à la direction d'avancement (A). Selon la forme de réalisation des figures, le troisième arbre (60) formant la troisième sortie primaire (59) et le quatrième arbre (67) formant l'entrée secondaire (66) sont confondus avec l'arbre de transmission (68) dont la longueur correspond sensiblement à la largeur du mécanisme de transmission (27) comprise entre le côté primaire intérieur (35) et le côté secondaire extérieur (63). L'entrée secondaire (66) transmet son mouvement de rotation à une sortie secondaire (69) du boîtier secondaire (61) par des moyens d'engrènement secondaires (70). A cette fin, le quatrième arbre (67) formant l'entrée secondaire (66) porte une roue dentée secondaire (71) qui engrène avec une roue dentée intermédiaire (72) logée dans le boîtier secondaire (61). Cette roue dentée intermédiaire (72) est en prise avec une autre roue dentée (73) portée par un arbre de sortie (74) sensiblement parallèle à l'arbre de transmission (68). L'arbre de sortie (74) s'étend depuis cette autre roue dentée (73) en direction du deuxième organe de conditionnement (20). L'extrémité de l'arbre de sortie (74) voisine du deuxième organe de conditionnement (20) forme la sortie secondaire (69). Cette dernière comporte un accouplement au moyen duquel la sortie secondaire (69) est reliée directement au deuxième organe de conditionnement (20). Ainsi qu'il ressort des figures 4 et 8, l'accouplement relié au premier organe de conditionnement (19) et celui relié au deuxième organe de conditionnement (20), sont situés sensiblement au même niveau transversal l'un par rapport à l'autre. Sur la vue de côté de la figure 7, il apparaît que le boîtier secondaire (61) s'étend vers l'avant et vers le bas par rapport à l'arbre de transmission (68). Les roues dentées (71, 72 et 73), les arbres (67 et 74) et les paliers contenus dans le carter secondaire (64), forment des moyens de transmission de couple secondaires (75). Ces derniers sont donc des moyens de transmission de couple par engrènement. Les moyens de transmission de couple secondaires (75) logés au sein du carter secondaire (64) relient entre eux, de manière synchronisée, l'entrée secondaire (66) et la sortie secondaire (69). Ainsi, sont reliés entre eux de manière synchronisée, l'arbre d'entrée (38), la première sortie primaire (52), la deuxième sortie primaire (56), la troisième sortie primaire (59), ainsi que l'entrée secondaire (66) et la sortie secondaire (69). Les premier et deuxième organes de conditionnement (19 et 20) sont donc animés en rotation de manière synchronisée entre eux. Cette caractéristique est avantageuse pour éviter une usure prématurée des nervures de l'un desdits organes de conditionnement (19 et 20) coopérant avec les échancrures de l'autre desdits organes de conditionnement (19 et 20). Les premier et deuxième organes de conditionnement (19 et 20) sont de plus synchronisés avec les organes de coupe (14, 14').

Le mécanisme de transmission (27) comporte également un dispositif de lubrification (76) du boîtier primaire (29). Ce dispositif de lubrification (76) comporte notamment une pompe (77), représentée notamment aux figures 3 et 4, et un lubrifiant fluide tel que de l'huile. La pompe (77) est un organe distinct des moyens de transmission de couple primaires et secondaires (42 et 75). Elle comporte une chambre d'entrée par laquelle le lubrifiant est aspiré, et une chambre de sortie dans laquelle le lubrifiant est pressurisé. La pompe (77) comporte une partie mobile séparant la chambre d'entrée de la chambre de sortie. Cette partie mobile est mécaniquement reliée aux moyens de transmission de couple primaires (42). A cette fin, ladite partie mobile est liée à un pignon (78), représenté à la figure 6, qui engrène avec les moyens de transmission de couple primaires (42). En particulier, ce pignon (78) engrène avec la roue dentée terminale (57). Ainsi, pendant le travail de la machine (1), la pompe (77) est animée par les moyens de transmission de couple primaires (42) auxquels elle est reliée. La pompe (77) aspire le lubrifiant contenu dans le boîtier primaire (29). Elle est située dans une partie inférieure du boîtier primaire (29). Elle est notamment située à proximité de l'extrémité primaire inférieure (31) et de l'extrémité primaire arrière (34). Le dispositif de lubrification (76) comporte en sus un réseau de distribution primaire (79), représenté notamment aux figures 3 et 4, qui communique avec le volume intérieur primaire (37) du boîtier primaire (29). Ce réseau de distribution primaire (79) est alimenté en lubrifiant par la pompe (77) et distribue le lubrifiant vers une partie au moins des moyens de transmission de couple primaires (42).

Selon l'invention, le dispositif de lubrification (76) comporte un réseau de distribution secondaire (80) visible sur les figures 3 et 4. Ce dernier communique avec le volume intérieur secondaire (65) du boîtier secondaire (61). Le réseau de distribution secondaire (80) est alimenté en lubrifiant par la pompe (77). Cette alimentation peut être directe ou indirecte. Au moyen de ce réseau de distribution secondaire (80), le lubrifiant est distribué vers une partie au moins des moyens de transmission de couple secondaires (75). L'invention est également caractérisée par le fait que le dispositif de lubrification (76) comporte un réseau de retour (81) du lubrifiant contenu dans le boîtier secondaire (61). Ce réseau de retour (81) communique avec le volume intérieur secondaire (65). Il est destiné à renvoyer le lubrifiant vers la pompe (77). Ce renvoi vers la pompe (77) peut être direct ou indirect. Le réseau de retour (81) se situe à une hauteur au-dessus du sol inférieure à celle du réseau de distribution secondaire (80), de sorte que pendant le fonctionnement de la machine (1), ou bien lors de l'arrêt de cette dernière, le lubrifiant véhiculé dans le boîtier secondaire (61) par le réseau de distribution secondaire (80), converge par gravité vers le réseau de retour (81).

Selon une caractéristique avantageuse de l'invention, le mécanisme de transmission (27) est verticalement délimité par l'extrémité primaire inférieure (31) et par l'extrémité primaire supérieure (32) du carter primaire (30). Autrement dit, le mécanisme de transmission (27) s'étend vers le bas jusqu'à l'extrémité primaire inférieure (31). Il s'étend de plus vers le haut jusqu'à l'extrémité primaire supérieure (32). Le lubrifiant remplit une poche inférieure (82) du carter primaire (30) délimitée verticalement, par le bas, par l'extrémité primaire inférieure (31). Cette poche inférieure (82) est formée par la partie inférieure du carter primaire (30) délimitée vers le bas par l'extrémité primaire inférieure (31). Cette poche inférieure (82) constitue de la sorte une réserve de lubrifiant, dans laquelle les moyens de transmission de couple primaires (42) situés immédiatement au-dessus de l'extrémité primaire inférieure (31), baignent en partie pendant le fonctionnement de la machine (1) et lorsque celle-ci est à l'arrêt. Pendant le fonctionnement, la roue dentée terminale (57) baigne partiellement dans le lubrifiant. Par sa rotation, elle véhicule le lubrifiant vers une partie des moyens de transmission de couple primaires (42) situés au-dessus d'elle, en l'occurrence vers une partie de la cascade de roues dentées constituant les moyens d'engrènement primaires (55) dont fait partie ladite roue dentée terminale (57). Lorsque la machine (1) est à l'arrêt, le niveau de lubrifiant remplissant cette poche inférieure (82) arrive sensiblement à hauteur de l'axe géométrique de la deuxième sortie primaire (56). Pendant le fonctionnement, le niveau de lubrifiant remplissant cette poche inférieure (82) s'établit au-dessous du niveau à l'arrêt. Le niveau de lubrifiant remplissant la poche inférieure (82) demeure donc relativement réduit, de sorte qu'en fonctionnement, l'échauffement du lubrifiant et les pertes de rendement mécanique induits par barbotage des moyens de transmission de couple primaires (42) dans le lubrifiant, sont fort réduits. Par ailleurs, la pompe (77) aspire le lubrifiant remplissant la poche inférieure (82). La pompe (77) aspire donc le lubrifiant là où il retourne naturellement par gravité. Ainsi, lors d'un démarrage de la machine (1) consécutif à un certain temps d'arrêt, du lubrifiant est immédiatement disponible pour la pompe (77). Une caractéristique avantageuse de l'invention prévoit à cette fin que la chambre d'entrée de la pompe (77) soit immergée dans le lubrifiant remplissant la poche inférieure (82). Notamment, la chambre d'entrée de la pompe (77) est située au-dessous d'un plan horizontal passant par l'axe géométrique de la deuxième sortie primaire (56), de sorte que la chambre d'entrée de la pompe (77) soit immergée dans le lubrifiant.

Selon une caractéristique avantageuse de l'invention visible sur les figures 6 et 8, le boîtier primaire (29) comporte un déflecteur (115) disposé, au sein du volume intérieur primaire (37), entre les moyens de transmission de couple primaires (42) et l'extrémité primaire inférieure (31). En sus, la pompe (77) aspire le lubrifiant à travers un orifice (116) situé sous le déflecteur (115). Cet orifice (116) représenté schématiquement sur les figures 3 et 6, communique avec la chambre d'entrée de la pompe (77). Le déflecteur (115) est situé sous les moyens de transmission de couple primaires (42), notamment sous la roue dentée terminale (57). Ce déflecteur (115) s'étend également sous le pignon (78) assurant l'animation de la pompe (77). Le déflecteur (115) est par exemple une tôle fixée à une paroi du carter primaire (30). Le déflecteur (115) s'étend sensiblement horizontalement. Le déflecteur (115) s'étend au sein de la poche inférieure (82) qu'il sépare en une zone supérieure située au-dessus du déflecteur, dans laquelle se trouvent les moyens de transmission de couple primaires (42), et en une zone inférieure. Cette zone inférieure s'étend donc verticalement entre le déflecteur (115) et l'extrémité primaire inférieure (31). Cette zone inférieure forme une «zone de repos» du lubrifiant. En effet, le déflecteur (115) fait écran aux projections de lubrifiant générées par les moyens de transmission de couple primaires (42) en rotation. De plus, ces derniers sont empêchés de barboter dans le lubrifiant présent sous le déflecteur (115). Par ailleurs, lorsque pendant le travail, la machine (1) évolue sur un terrain irrégulier, comme cela est souvent le cas avec une machine de coupe du type faucheuse, le déflecteur (115) freine les mouvements de balancement du lubrifiant présent dans la poche inférieure (82). Dès lors, la disposition de l'orifice (116) sous le déflecteur (115) garantit une alimentation sûre et régulière de la pompe (77), sans risque de cavitation de cette dernière.

Le réseau de distribution primaire (79) se compose d'au moins un canal, notamment de plusieurs canaux (83, 84). Un canal est par exemple un tuyau. Ce ou ces canaux (83, 84) communiquent avec la chambre de sortie de la pompe (77). Ils véhiculent le lubrifiant refoulé au niveau de cette chambre de sortie. Un premier canal (84), visible notamment sur la figure 5, communique avec le volume intérieur primaire (37) à proximité de l'extrémité primaire supérieure (32). Ce premier canal (84) est relié à un embout orienté de sorte que le lubrifiant circulant à l'intérieur de ce premier canal forme, à la sortie de cet embout, un jet dirigé entre la roue dentée d'entrée (43) et le pignon d'entrée (44) qui forment le renvoi d'angle d'entrée (45). Ce dernier se trouve ainsi refroidi pendant le travail de la machine (1). En sus, la rotation de la roue dentée d'entrée (43) et du pignon d'entrée (44) provoque la projection de lubrifiant dans toute la partie supérieure du volume intérieur primaire (37). De la sorte, le lubrifiant atteint également le renvoi d'angle primaire (50) ainsi que la roue dentée (54) située entre ce dernier et le renvoi d'angle d'entrée (45). Ensuite, par projection contre les autres parois du carter primaire (30), et par contacts mutuels des engrenages constituant la cascade de roues dentées des moyens d'engrènement primaires (55), le lubrifiant se répartit le long des autres moyens de transmission de couple primaires (42) en rotation. Il finit par rejoindre la partie inférieure du carter primaire (30) délimitée, par le bas, par l'extrémité primaire inférieure (31). Ainsi, selon une caractéristique avantageuse de l'invention, pendant le fonctionnement de la machine (1), donc du dispositif de lubrification (76), le lubrifiant circule, au moins sensiblement, entre les extrémités primaires inférieure et supérieure (31 et 32). En sus, le lubrifiant se répartit au moins sensiblement entre les extrémités primaires avant et arrière (33 et 34). Entre l'extrémité primaire supérieure (32) et la poche inférieure (82), le carter primaire (30) est sensiblement exempt de zones de retenue du lubrifiant. Le carter primaire (30) est notamment, entre l'extrémité primaire supérieure (32) et la poche inférieure (82), sensiblement exempt de zones susceptibles d'accumuler des quantités de lubrifiant importantes, telles des poches ou autres zones formant réservoir pour le lubrifiant à l'intérieur du carter primaire (30). De la sorte, le lubrifiant amené par le réseau de distribution primaire (79) au niveau du renvoi d'angle d'entrée (45), est distribué vers les moyens de transmission de couple primaires (42) et rejoint la partie inférieure du carter primaire (30). Cette sensible absence de zones de retenue fait que la quantité de lubrifiant « en transit » entre la poche inférieure (82) et l'extrémité primaire supérieure (32) du carter primaire (30), est limitée. Les pertes de rendement mécanique dues à ce lubrifiant en transit sont donc réduites. De plus, la poche inférieure (82), vers laquelle le lubrifiant retourne par gravité sans, par ailleurs, s'accumuler de manière significative dans le carter primaire (30), forme une réserve suffisante de lubrifiant pour assurer l'alimentation de la pompe (77). Enfin, la sensible absence de zones de retenue du lubrifiant entre l'extrémité primaire supérieure (32) et la poche inférieure (82), permet une vidange quasi complète, et en une fois, du boîtier primaire (29), au moyen notamment d'un orifice de vidange (85) placé au voisinage immédiat de l'extrémité primaire inférieure (31).

Ainsi qu'il apparaît à la figure 7, le carter secondaire (64) comporte notamment une paroi supérieure (86) et une paroi inférieure (87). Le carter secondaire (64) comporte également une extrémité secondaire inférieure (88) qui délimite la paroi inférieure (87) vers le bas. Le réseau de distribution secondaire (80) comporte au moins un deuxième canal (89), notamment un tuyau, communiquant avec la chambre de sortie de la pompe (77), dans lequel circule le lubrifiant refoulé au niveau de cette chambre de sortie. Ce deuxième canal (89) communique avec le volume intérieur secondaire (65) au niveau d'un premier orifice (90) pratiqué dans la paroi supérieure (86) du carter secondaire (64). Ce deuxième canal (89) est relié à un embout orienté de sorte que le lubrifiant circulant à l'intérieur de ce deuxième canal (89) forme, à la sortie de cet embout, un jet dirigé vers la roue dentée secondaire (71). Par engrènement avec la roue dentée intermédiaire (72) et l'autre roue dentée (73) logées dans le carter secondaire (64), cette roue dentée secondaire (71) répartit le lubrifiant à l'intérieur du boîtier secondaire (61), vers l'ensemble des moyens de transmission de couple secondaires (75). Par gravité, une partie du lubrifiant s'écoule le long de la paroi inférieure (87). Le lubrifiant rejoint sensiblement l'extrémité secondaire inférieure (88). Au voisinage de celle-ci, le réseau de retour (81) du lubrifiant contenu dans le boîtier secondaire (61) communique avec le volume intérieur secondaire (65). A cette fin, le carter secondaire (64) comporte un deuxième orifice (90') situé à proximité immédiate de l'extrémité secondaire inférieure (88). Le réseau de retour (81) est relié à ce deuxième orifice (90'). Ce réseau de retour (81) comporte notamment un troisième canal (91), par exemple un tuyau, relié à un embout fixé au boîtier secondaire (61) au niveau dudit deuxième orifice (90'). A son extrémité distante de cet embout, ce troisième canal (91) est relié à un autre embout. Cet autre embout peut être fixé au boîtier primaire (29), de sorte que le lubrifiant circulant dans le réseau de retour (81) soit renvoyé à l'intérieur du volume intérieur primaire (37), notamment dans la poche inférieure (82) du carter primaire (30). Dans ce cas, ce lubrifiant est indirectement renvoyé vers la pompe (77). Néanmoins, il est aussi envisageable que ledit autre embout soit relié directement à la chambre d'entrée de la pompe (77). Dans ce cas, le lubrifiant est directement renvoyé vers la pompe (77). Cet agencement est celui prévu dans la forme de réalisation des figures. Ainsi, pendant le fonctionnement de la machine (1), le lubrifiant circule en permanence à l'intérieur du boîtier secondaire (61), et un niveau de lubrifiant est sensiblement empêché de s'établir à l'intérieur du boîtier secondaire (61). De la sorte, les moyens de transmission de couple secondaires (75) sont sensiblement empêchés de barboter dans le lubrifiant présent dans le boîtier secondaire (61). La lubrification et le refroidissement de ces moyens sont donc optimaux. Le retour, direct ou indirect, du lubrifiant du boîtier secondaire (61) vers la pompe (77), permet de vidanger simultanément le boîtier primaire (29) et le boîtier secondaire (61), au moyen de l'orifice de vidange (85) du boîtier primaire (29).

Selon une caractéristique avantageuse de l'invention, le dispositif de lubrification (76) comporte un réservoir (92). Ce dernier comporte au moins une entrée (93) et au moins une sortie (94). Le réservoir (92) est relié à la pompe (77) au moyen d'un quatrième canal (83) représenté en totalité à la figure 4 et dont la vue est partiellement occultée par le boîtier secondaire (61) sur la figure 3. Le réservoir (92) est de plus relié à l'un au moins des réseaux de distribution primaire et secondaire (79 et 80). Ce réservoir (92) est fixé sur le côté primaire intérieur (35) en projection duquel il s'étend, en direction du mécanisme de récolte (11). Cette disposition du réservoir (92) évite que ce dernier n'augmente la largeur totale de la machine (1). En sus, le réservoir (92) s'étend au-dessus du deuxième organe de conditionnement (20), et au-dessus de la partie arrière du mécanisme de coupe (13). Ce positionnement du réservoir (92) en hauteur sur le mécanisme de transmission (27), quelque peu à l'écart des organes de conditionnement (19 et 20) et du mécanisme de coupe (13), permet de conserver un mécanisme de récolte (11) de grande largeur. Le réservoir (92) permet au dispositif de lubrification (76) de contenir un volume total important de lubrifiant. Cela permet d'assurer des débits élevés de lubrifiant à travers le réseau de distribution primaire (79) et le réseau de distribution secondaire (80). Ainsi, les moyens de transmission de couple primaires et secondaires (42 et 75) sont approvisionnés en lubrifiant de manière optimale, et sont bien refroidis. Par ailleurs, le réservoir (92) contient une fraction importante, de préférence entre la moitié et les trois quarts, du volume total de lubrifiant contenu dans le dispositif de lubrification (76), ce qui, au moins pendant le fonctionnement de ce dernier, réduit fortement la fraction restante présente à l'intérieur des boîtiers primaire et secondaire (29 et 61). Se trouve ainsi évité le problème d'un échauffement excessif et d'une dégradation accélérée du lubrifiant, d'une part par un barbotage trop important des moyens de transmission de couple primaires et secondaires (29 et 61) dans leurs carters primaire et secondaire (30 et 64) respectifs, d'autre part par cisaillement du lubrifiant entre ces moyens de transmissions de couple primaires et secondaires (29 et 61) et les parois de leurs carters primaire et secondaire (30 et 64) respectifs. Enfin, le réservoir (92) assure une fonction additionnelle de refroidissement du lubrifiant par échange thermique, avec l'air ambiant, à travers ses parois.

Selon une caractéristique avantageuse de l'invention, l'entrée (93) du réservoir (92) est reliée à la pompe (77), et la sortie (94) du réservoir (92) est reliée à l'un au moins des réseaux de distribution primaire et secondaire (79 et 80). L'entrée (93) est reliée à la pompe (77) au moyen du quatrième canal (83). Par son entrée (93), le réservoir (92) est rempli, au moins partiellement, par le lubrifiant envoyé par la pompe (77). Le fait de relier l'entrée (93) du réservoir (92) à la chambre de sortie de la pompe (77) permet, pendant le fonctionnement de la machine (1), d'alimenter le réservoir (92) par pression du lubrifiant refoulé par la pompe (77), et ainsi, de placer le réservoir (92) relativement en hauteur, ainsi que cela a été décrit précédemment.

Selon une autre caractéristique avantageuse de l'invention, la sortie (94) du réservoir (92) est connectée, d'une part, au réseau de distribution primaire (79), par laquelle sortie (94) ce dernier est alimenté en lubrifiant, et d'autre part au réseau de distribution secondaire (80), par laquelle sortie (94) ce dernier est alimenté en lubrifiant. Le premier canal (84) venant alimenter en lubrifiant les moyens de transmission de couple primaires (42), notamment venant lubrifier le renvoi d'angle d'entrée (45), est connecté à la sortie (94). Le deuxième canal (89) venant alimenter en lubrifiant les moyens de transmission de couple secondaires (75), est également connecté à la sortie (94). Le fait d'alimenter chaque réseau de distribution (79, 80) à partir de la sortie (94) du réservoir (92), induit une lubrification en parallèle du boîtier primaire (29) et du boîtier secondaire (61). Ainsi, la température du lubrifiant véhiculé par le réseau de distribution primaire (79), en direction des moyens de transmission de couple primaires (42), est sensiblement identique à celle du lubrifiant véhiculé par le réseau de distribution secondaire (80), en direction des moyens de transmission de couple secondaires (75). Cette température est par ailleurs relativement modérée étant donné que le lubrifiant peut se refroidir à l'intérieur du réservoir (92), avant d'en sortir. La lubrification en parallèle permet également de déterminer la répartition du lubrifiant entre les réseaux de distribution primaire et secondaire (79 et 80), afin de garantir des débits de lubrifiant adéquats vers les moyens de transmission de couple primaires et secondaires (42 et 75).

Selon une caractéristique avantageuse de l'invention, le réservoir (92) est rempli par débordement du lubrifiant à l'intérieur du réservoir (92). Ce débordement est défini par un niveau de débordement (95). Le niveau du lubrifiant contenu à l'intérieur du réservoir (92) est toujours, au minimum, sensiblement égal à ce niveau de débordement (95). Par « toujours », on entend quelle que soit la situation de la machine (1), à savoir en fonctionnement ou non. En vue d'obtenir ce remplissage par débordement, le réservoir (92) contient une conduite (96), illustrée à la figure 4, dont l'extrémité inférieure communique avec le quatrième canal (83) du réseau de distribution primaire (79) connecté à la pompe (77). En l'occurrence, l'entrée (93) du réservoir est formée par cette extrémité inférieure. La conduite (96) comporte une extrémité supérieure au niveau de laquelle se situe le niveau de débordement (95). Pendant le fonctionnement de la machine (1), le lubrifiant en provenance de la pompe (77) animée ressort de cette conduite (96) au niveau de l'extrémité supérieure de celle-ci, et le niveau de lubrifiant est supérieur ou égal au niveau de débordement (95). Pendant le fonctionnement, le lubrifiant en provenance de la pompe (77) contient une certaine proportion de bulles d'air, ce qui s'explique par le brassage du lubrifiant au sein des boîtiers primaire et secondaire (29 et 61). Le principe du remplissage du réservoir (92) par débordement permet à une grande partie de ces bulles d'air de se séparer du lubrifiant lorsque celui-ci arrive au niveau de l'extrémité supérieure de la conduite (96).

Selon une caractéristique avantageuse de l'invention, les réseaux de distribution primaire et secondaire (79 et 80) comportent chacun une portion située à une hauteur au-dessus du sol supérieure à celle que présente le niveau de débordement (95). Il ressort notamment de la figure 4 qu'à leur sortie du réservoir, les réseaux de distribution primaire et secondaire (79 et 80) s'étendent en partie au-dessus du niveau de débordement (95). C'est ainsi que le premier canal (84) reliant la sortie (94) au volume intérieur primaire (37), s'étend en majeure partie au-dessus du niveau de débordement (95). Le deuxième canal (89) reliant la sortie (94) au volume intérieur secondaire (65), s'étend au-dessus du niveau de débordement (95). Grâce à ce positionnement des réseaux de distribution primaire et secondaire (79 et 80) par rapport au niveau de débordement (95), le niveau du lubrifiant contenu dans le réservoir (92) demeure, lorsque la machine (1) est arrêtée, sensiblement égal au niveau de débordement (95). Ainsi, suite à un temps d'arrêt de la machine (1), du lubrifiant est rapidement véhiculé depuis la sortie (94) du réservoir (92) vers les moyens de transmission de couple primaires et secondaires (79 et 80). Ces derniers ne subissent ainsi aucun dommage dû à un fonctionnement à sec lors du démarrage de la machine (1). Cet effet est très avantageux sur la machine (1) selon l'invention qui peut rester immobilisée pendant plusieurs mois. Une machine de récolte, notamment une machine de coupe telle qu'une faucheuse illustrée sur les figures, est par exemple susceptible d'être remisée durant toute la saison hivernale.

Selon une caractéristique avantageuse de l'invention, le réservoir (92) présente un volume intérieur susceptible d'être totalement rempli par le lubrifiant pendant le fonctionnement du dispositif de lubrification (76). En sus, le niveau de débordement (95) correspond à un volume de lubrifiant à l'intérieur du réservoir (92) représentant une grande partie de ce volume intérieur. Ce volume de lubrifiant représente au moins la moitié, de préférence au moins les trois quarts, dudit volume intérieur. De la sorte, le réservoir (92) contient toujours un volume important de lubrifiant, disponible pendant le fonctionnement de la machine (1), ou bien lors d'un démarrage consécutif à un arrêt prolongé.

Selon une caractéristique avantageuse de l'invention qui apparaît sur la figure 8, le mécanisme de transmission (27) comporte des moyens de liaison (97) qui relient directement le carter secondaire (64) au carter primaire (30). Par « directement », on entend que lesdits carters (30 et 64) sont accolés, ou sensiblement accolés, l'un à l'autre. L'espace, entre le côté primaire extérieur (36) du carter primaire (30) et le côté secondaire intérieur (62) du carter secondaire (64), est nettement inférieur aux largeurs respectives desdits carters (30 et 64). Est ainsi obtenu un mécanisme de transmission (27) compact où le carter secondaire (64) est situé au plus près du carter primaire (30). Ces moyens de liaison (97) directe du carter secondaire (64) au carter primaire (30) autorisent une mobilité de ces deux carters (30 et 64) l'un par rapport à l'autre, notamment dans un plan sensiblement vertical et sensiblement parallèle à la direction d'avancement (A). En raison de cette mobilité relative des carters primaire et secondaire (30 et 64), le réseau de retour (81) comporte une faculté de déformation afin d'accompagner le mouvement du carter secondaire (64) par rapport au carter primaire (30). Le troisième canal (91) que comporte le réseau de retour (81) est ainsi doté d'une certaine flexibilité. Il s'agit par exemple d'un tuyau souple. De plus, à la même fin de suivre la mobilité relative des carters primaire et secondaire (30 et 64), le réseau de retour (81) s'étend à l'extérieur de ces derniers, c'est-à-dire en dehors du volume intérieur primaire (37) et du volume intérieur secondaire (65). Tels que représentés à la figure 8, les moyens de liaison (97) comportent notamment une portion circulaire primaire (98) du carter primaire (30) et une portion circulaire secondaire (99) du carter secondaire (64). Les moyens de liaison (97) comportent également une bague (100) reliant la portion circulaire secondaire (99) du carter secondaire (64) à la portion circulaire primaire (98) du carter primaire (30). L'une (98) de ces portions circulaires (98 et 99) est une portion circulaire intérieure, par exemple une portée circulaire intérieure, pratiquée dans un côté du carter (30) correspondant. L'autre (99) de ces portions circulaires (98 et 99) est une portion circulaire extérieure, par exemple une portée circulaire extérieure, d'un bossage (101) que comporte le côté de l'autre carter (64) voisin dudit côté du carter (30). Plus précisément, la portion circulaire intérieure est une ouverture pratiquée dans le côté primaire extérieur (36) du carter primaire (30). La portion circulaire extérieure est une portée circulaire qui s'étend en projection depuis le côté secondaire intérieur (62) du carter secondaire (64), en direction du deuxième organe de conditionnement (20). De plus, cette portion circulaire extérieure s'étend en partie à l'intérieur de la portion circulaire intérieure dont elle est radialement séparée par la bague (100).

Ainsi, et selon une autre caractéristique avantageuse de l'invention, le carter secondaire (64) est relié au carter primaire (30) au moyen d'une liaison pivotante (102). Cette dernière comporte des moyens de pivotement (108). Dans la forme de réalisation des figures, ces moyens de pivotement (108) comportent la bague (100) décrite précédemment. Les moyens de liaison (97) qui relient directement le carter secondaire (64) au carter primaire (30) comportent donc avantageusement ladite liaison pivotante (102). La liaison pivotante (102) présente un axe de pivotement (103) sensiblement confondu avec l'axe géométrique de l'arbre de transmission (68) reliant entre elles la troisième sortie primaire (59) et l'entrée secondaire (66). L'arbre de transmission (68) est notamment porté par des moyens de guidage en rotation (104) de cet arbre de transmission (68) dans le carter primaire (30) et/ou le carter secondaire (64). Dans la forme de réalisation des figures, ces moyens de guidage en rotation (104) sont situés, suivant une direction parallèle audit axe géométrique, sensiblement au même niveau que les moyens de liaison (97) directe du carter secondaire (64) au carter primaire (30). En sus, ces moyens de guidage en rotation (104) sont insérés dans un logement (105) des carters primaire (30) et/ou secondaire (64) qui accueille ledit arbre de transmission (68). Ce logement (105) est formé au sein des moyens de liaison (97) qui relient directement le carter secondaire (64) au carter primaire (30). Ce logement (105) est en particulier réalisé au sein du bossage (101) que comporte le côté secondaire intérieur (62) du carter secondaire (64).

Selon une caractéristique particulièrement avantageuse de l'invention, le volume intérieur primaire (37) du boîtier primaire (29) et le volume intérieur secondaire (65) du boîtier secondaire (61), sont mis en communication l'un avec l'autre au moyen d'une zone d'interface (106). Cette zone d'interface (106) les sépare. Elle autorise le lubrifiant présent dans le volume intérieur primaire (37) ou le volume intérieur secondaire (65), à la traverser pour rejoindre l'autre desdits volume intérieur primaire (37) et volume intérieur secondaire (65). Cette zone d'interface (106) permet d'équilibrer les pressions d'air respectives au sein du boîtier primaire (29) et du boîtier secondaire (61). Ainsi, un seul dispositif de mise à l'air, par exemple un reniflard, est requis pour l'ensemble du mécanisme de transmission (27), ce qui en simplifie la conception. De plus, cette zone d'interface (106) se substitue à d'éventuels joints d'étanchéité disposés entre le volume intérieur primaire (37) et le volume intérieur secondaire (65) et empêchant le lubrifiant de passer de l'un vers l'autre. Là encore, il en résulte une conception plus simple et moins encombrante, notamment dans le sens de la largeur, c'est-à-dire suivant l'axe géométrique de l'arbre de transmission (68) reliant entre elles la troisième sortie primaire (59) et l'entrée secondaire (66). Pendant le fonctionnement de la machine (1), le lubrifiant se répartit pour l'essentiel entre le haut et le bas de chacun des boîtiers (29 et 61), notamment depuis les réseaux de distribution (79 et 80) respectifs jusqu'à la chambre d'entrée de la pompe (77). Seule une quantité réduite de lubrifiant circule entre les volumes intérieurs primaire et secondaire (37 et 65) via la zone d'interface (106).

Selon une caractéristique avantageuse de l'invention, la zone d'interface (106) s'étend, suivant une direction radiale à l'arbre de transmission (68), d'une périphérie (107) de l'arbre de transmission (68) vers au moins le logement (105) des carters primaire et/ou secondaire (30, 64) qui accueille ledit arbre de transmission (68). Ainsi, il est prévu d'utiliser le jeu radial entre l'arbre de transmission (68) et son logement (105), lequel jeu radial est requis pour que l'arbre de transmission (68) puisse y tourner librement autour de son axe géométrique, pour y aménager la zone d'interface (106). La réalisation de cette zone d'interface (106) ne requiert donc pas de moyens techniques supplémentaires qui viendraient compliquer la réalisation du mécanisme de transmission (27).

Il est encore avantageux que la zone d'interface (106) comporte une partie au moins des moyens de pivotement (108) que comporte la liaison pivotante (102) entre le carter primaire (30) et le carter secondaire (64). A la place, ou en sus, il peut être avantageux que la zone d'interface (106) comporte les moyens de guidage en rotation (104) de l'arbre de transmission (68) dans le carter primaire (30) et/ou le carter secondaire (64). Ainsi, le lubrifiant cheminant à travers la zone d'interface (106) vient lubrifier lesdits moyens de pivotement (108) et/ou de guidage en rotation (104). La circulation du lubrifiant à travers la zone d'interface (106) crée une lubrification dynamique des moyens (104 et 108) suscités dont le refroidissement est ainsi amélioré en même temps que leur usure est réduite. Dans la forme de réalisation des figures, la zone d'interface (106) comporte lesdits moyens de guidage en rotation (104) qui sont formés par au moins un palier, notamment un palier à roulement, comportant par exemple deux roulements. Le lubrifiant peut ainsi cheminer à travers le palier, notamment à travers le palier à roulement, en l'occurrence entre les éléments roulants que comporte ce palier à roulement.

Selon une caractéristique avantageuse de l'invention, l'arbre de transmission (68) est un arbre creux à l'intérieur duquel s'étend un moyen de rappel (109). Tel qu'illustré aux figures 4 et 8, ce dernier est relié d'une part au bâti (12) du mécanisme de récolte (11), et d'autre part au carter secondaire (64). Le moyen de rappel (109) tend à rapprocher le deuxième organe de conditionnement (20) du premier organe de conditionnement (19), de sorte que, pendant le fonctionnement de la machine (1), lesdits organes de conditionnement (19 et 20) tendent à comprimer les végétaux qui passent entre eux. Néanmoins, ce moyen de rappel (109) comporte la faculté de laisser les premier et deuxième organes de conditionnement (19 et 20) s'éloigner suffisamment l'un de l'autre lorsqu'un paquet dense de végétaux fauchés passe entre eux. Le moyen de rappel (109) comporte une barre (110) qui traverse l'arbre de transmission (68). Une première extrémité (111) du moyen de rappel (109) est liée au bâti (12) du mécanisme de récolte (11). Une deuxième extrémité (112) du moyen de rappel (109) est fixée au carter secondaire (64) par des moyens d'immobilisation en rotation (113) autour de l'axe géométrique de l'arbre de transmission (68). Notamment, ces moyens d'immobilisation en rotation (113) lient le carter secondaire (64) à la barre (110) du moyen de rappel (109). Ces moyens d'immobilisation en rotation (113) sont par exemple des cannelures. L'axe géométrique de la barre (110) du moyen de rappel (109) est sensiblement confondu avec celui de l'arbre de transmission (68). Ainsi, cette barre (110) est sensiblement concentrique à ce dernier. De plus, l'axe géométrique de la barre (110) est sensiblement confondu avec l'axe de pivotement (103) de la liaison pivotante (102), autour duquel axe de pivotement (103) le carter secondaire (64) peut pivoter par rapport au carter primaire (30). La barre (110) est par exemple une barre de torsion. Cette barre de torsion est liée par la première extrémité (111) au bâti (12) du mécanisme de récolte (11), et par la deuxième extrémité (112) au carter secondaire (64). Cette conception du moyen de rappel (109) s'étendant, au moins en partie, à l'intérieur du mécanisme de transmission (27), notamment à l'intérieur de l'arbre de transmission (68) creux, apporte légèreté et compacité au mécanisme de transmission (27).

La machine de récolte de fourrage selon l'invention est notamment une faucheuse-conditionneuse du type comportant un châssis porté par des roues au sol et comportant un timon pour être tracté par un véhicule tracteur. Néanmoins, une machine selon l'invention telle qu'une faucheuse-conditionneuse, peut aussi comporter un châssis porté par l'attelage trois points d'un tracteur, une telle machine pouvant être portée à l'avant ou à l'arrière du tracteur. Une machine selon l'invention peut comporter plusieurs mécanismes de récolte, par exemple deux mécanismes de récolte placés de part et d'autre d'un châssis central. Enfin, une machine selon l'invention peut être une faucheuse-conditionneuse automotrice.

Bien entendu, l'invention n'est pas limitée à la forme de réalisation décrite et représentée sur les figures annexées. Des modifications restent possibles dans la limite définie par les revendications.

## Revendications

1. Machine (1) agricole pour la récolte de végétaux comportant :
- un châssis (2),
- au moins un mécanisme de récolte (11) relié au châssis (2) et comportant :
∘ un mécanisme de coupe (13) comportant des organes de coupe (14, 14') destinés à couper des végétaux, et
∘ un dispositif de conditionnement (18) comportant des premier et deuxième organes de conditionnement (19 et 20) contrarotatifs susceptibles de s'éloigner l'un de l'autre et entre lesquels sont destinés à passer les végétaux coupés par les organes de coupe (14, 14') en vue de leur traitement,
- un mécanisme de transmission (27) destiné à assurer l'animation des organes de coupe (14, 14') et des premier et deuxième organes de conditionnement (19 et 20), et comportant :
∘ un boîtier primaire (29) comportant :
▪ un carter primaire (30) délimitant un volume intérieur primaire (37),
▪ un arbre d'entrée (38) prévu pour être mis en mouvement à partir d'une source motrice,
▪ une première sortie primaire (52) reliée au mécanisme de coupe (13),
▪ une deuxième sortie primaire (56) reliée au premier organe de conditionnement (19),
▪ une troisième sortie primaire (59),
▪ des moyens de transmission de couple primaires (42) reliant entre eux l'arbre d'entrée (38), la première sortie primaire (52), la deuxième sortie primaire (56) et la troisième sortie primaire (59), et logés au sein du carter primaire (30),
∘ un boîtier secondaire (61) comportant :
▪ un carter secondaire (64) délimitant un volume intérieur secondaire (65),
▪ une entrée secondaire (66) reliée à la troisième sortie primaire (59),
▪ une sortie secondaire (69) reliée au deuxième organe de conditionnement (20),
▪ des moyens de transmission de couple secondaires (75) reliant entre eux l'entrée secondaire (66) et la sortie secondaire (69), et logés au sein du carter secondaire (64),
∘ un dispositif de lubrification (76) du boîtier primaire (29) comportant :
▪ un lubrifiant fluide,
▪ une pompe (77) aspirant le lubrifiant contenu dans le boîtier primaire (29),
▪ un réseau de distribution primaire (79) communiquant avec le volume intérieur primaire (37) et alimenté en lubrifiant par la pompe (77), au moyen duquel réseau de distribution primaire (79) le lubrifiant est distribué vers une partie au moins des moyens de transmission de couple primaires (42),
***caractérisée en ce que*** le dispositif de lubrification (76) comporte d'une part un réseau de distribution secondaire (80), qui communique avec le volume intérieur secondaire (65) et est alimenté en lubrifiant, directement ou indirectement, par la pompe (77), au moyen duquel réseau de distribution secondaire (80) le lubrifiant est distribué vers une partie au moins des moyens de transmission de couple secondaires (75), et d'autre part un réseau de retour (81) du lubrifiant contenu dans le boîtier secondaire (61), qui communique avec le volume intérieur secondaire (65) et est destiné à renvoyer, directement ou indirectement, ce lubrifiant vers la pompe (77).

2. Machine selon la revendication 1, ***caractérisée en ce que*** le mécanisme de transmission (27) est verticalement délimité par une extrémité primaire inférieure (31) du carter primaire (30) et par une extrémité primaire supérieure (32) du carter primaire (30), et que la pompe (77) aspire le lubrifiant remplissant une poche inférieure (82) du carter primaire (30) délimitée verticalement, par le bas, par ladite extrémité primaire inférieure (31).

3. Machine selon la revendication 1 ou 2, ***caractérisée en ce que*** le boîtier primaire (29) comporte un déflecteur (115) disposé, au sein du volume intérieur primaire (37), entre les moyens de transmission de couple primaires (42) et l'extrémité primaire inférieure (31), et que la pompe (77) aspire le lubrifiant à travers un orifice (116) situé sous le déflecteur (115).

4. Machine selon la revendication 2 ou 3, ***caractérisée en ce que*** pendant le fonctionnement de la machine (1), le lubrifiant circule, au moins sensiblement, entre les extrémités primaires inférieure et supérieure (31 et 32) du carter primaire (30), et qu'entre l'extrémité primaire supérieure (32) et la poche inférieure (82), le carter primaire (30) est sensiblement exempt de zones de retenue du lubrifiant.

5. Machine selon l'une quelconque des revendications 1 à 4, ***caractérisée en ce que*** le carter secondaire (64) comporte une extrémité secondaire inférieure (88) au voisinage de laquelle le réseau de retour (81) du lubrifiant contenu dans le boîtier secondaire (61) communique avec le volume intérieur secondaire (65).

6. Machine selon l'une quelconque des revendications 1 à 5, ***caractérisée en ce que*** le dispositif de lubrification (76) comporte un réservoir (92) comportant au moins une entrée (93) et au moins une sortie (94), et relié à la pompe (77) et à l'un au moins des réseaux de distribution primaire et secondaire (79 et 80).

7. Machine selon la revendication 6, ***caractérisée en ce que*** l'entrée (93) du réservoir (92) est reliée à la pompe (77), par laquelle entrée (93) le réservoir (92) est, au moins partiellement, rempli par le lubrifiant envoyé par la pompe (77), et que la sortie (94) est reliée à l'un au moins des réseaux de distribution primaire et secondaire (79 et 80).

8. Machine selon la revendication 6 ou 7, ***caractérisée en ce que*** la sortie (94) du réservoir (92) est connectée, d'une part, au réseau de distribution primaire (79), par laquelle sortie (94) ce dernier est alimenté en lubrifiant, et d'autre part au réseau de distribution secondaire (80), par laquelle sortie (94) ce dernier est alimenté en lubrifiant.

9. Machine selon l'une quelconque des revendications 6 à 8, ***caractérisée en ce que*** le réservoir (92) est rempli par débordement du lubrifiant à l'intérieur du réservoir (92), lequel débordement est défini par un niveau de débordement (95), et qu'un niveau de lubrifiant à l'intérieur du réservoir (92) est toujours au minimum sensiblement égal à ce niveau de débordement (95).

10. Machine selon les revendications 8 et 9, ***caractérisée en ce que*** les réseaux de distribution primaire et secondaire (79 et 80) comportent chacun une portion située à une hauteur au-dessus du sol supérieure à celle que présente le niveau de débordement (95).

11. Machine selon la revendication 9, ***caractérisée en ce que*** le réservoir (92) présente un volume intérieur susceptible d'être totalement rempli par le lubrifiant pendant le fonctionnement du dispositif de lubrification (76), et que le niveau de débordement (95) correspond à un volume de lubrifiant à l'intérieur du réservoir (92) représentant une grande partie de ce volume intérieur.

12. Machine selon l'une quelconque des revendications 1 à 11, ***caractérisée en ce que*** le mécanisme de transmission (27) comporte des moyens de liaison (97) qui relient directement le carter secondaire (64) au carter primaire (30).

13. Machine selon l'une quelconque des revendications 1 à 12, ***caractérisée en ce que*** le carter secondaire (64) est relié au carter primaire (30) au moyen d'une liaison pivotante (102) ayant un axe de pivotement (103) sensiblement confondu avec l'axe géométrique d'un arbre de transmission (68) reliant entre elles la troisième sortie primaire (59) et l'entrée secondaire (66).

14. Machine selon l'une quelconque des revendications 1 à 13, ***caractérisée en ce que*** le volume intérieur primaire (37) du boîtier primaire (29) et le volume intérieur secondaire (65) du boîtier secondaire (61) sont mis en communication l'un avec l'autre au moyen d'une zone d'interface (106) qui les sépare et qui autorise le lubrifiant présent dans le volume intérieur primaire (37) ou le volume intérieur secondaire (65), à la traverser pour rejoindre l'autre desdits volume intérieur primaire (37) et volume intérieur secondaire (65).

15. Machine selon la revendication 14, ***caractérisée en ce que*** la zone d'interface (106) s'étend, suivant une direction radiale à un (1') arbre de transmission (68) reliant entre elles la troisième sortie primaire (59) et l'entrée secondaire (66), d'une périphérie (107) de cet arbre de transmission (68) vers au moins un logement (105) des carters primaire et/ou secondaire (30, 64) qui accueille l'arbre de transmission (68).

16. Machine selon les revendications 13 et 14, ***caractérisée en ce que*** la zone d'interface (106) comporte une partie au moins des moyens de pivotement (108) que comporte la liaison pivotante (102) entre le carter primaire (30) et le carter secondaire (64), et/ou comporte des moyens de guidage en rotation (104) de l'arbre de transmission (68) dans le carter primaire (30) et/ou le carter secondaire (64).

17. Machine selon l'une quelconque des revendications 13, 15 et 16, ***caractérisée en ce que*** l'arbre de transmission (68) est un arbre creux à l'intérieur duquel s'étend un moyen de rappel (109) tendant à rapprocher le deuxième organe de conditionnement (20) du premier organe de conditionnement (19), et que le moyen de rappel (109) est relié d'une part à un bâti (12) du mécanisme de récolte (11), et d'autre part au carter secondaire (64).

## Patentansprüche

1. Landwirtschaftliche Pflanzenerntemaschine (1) mit
- einem Rahmen (2),
- mindestens einer Erntevorrichtung (11), die mit dem Rahmen (2) verbunden ist und
∘ einen Schneidmechanismus (13), der Schneidelemente (14, 14') umfasst, die zum Schneiden von Pflanzen bestimmt sind, und
∘ eine Aufbereitungsvorrichtung (18), die ein erstes und zweites gegenläufiges Aufbereitungselement (19 und 20) umfasst, die imstande sind, sich voneinander zu entfernen, und zwischen denen die von den Schneidelementen (14, 14') geschnittenen Pflanzen zu deren Aufbereitung durchlaufen sollen,
aufweist,
- einem Übertragungsmechanismus (27), der dazu bestimmt ist, den Antrieb der Schneidelemente (14, 14') und des ersten und zweiten Aufbereitungselements (19 und 20) sicherzustellen, und der
∘ einen Hauptkasten (29) mit
▪ einem Hauptgehäuse (30), das ein inneres Hauptvolumen (37) begrenzt,
▪ einer Antriebswelle (38), die vorgesehen ist, um ausgehend von einer Antriebsquelle in Bewegung gesetzt zu werden,
▪ einer ersten Hauptauslassmündung (52), die mit dem Schneidmechanismus (13) verbunden ist,
▪ einer zweiten Hauptauslassmündung (56), die mit dem ersten Aufbereitungselement (19) verbunden ist,
▪ einer dritten Hauptauslassmündung (59),
▪ Drehmoment-Hauptübertragungsmitteln (42), welche die Antriebswelle (38), die erste Hauptauslassmündung (52), die zweite Hauptauslassmündung (56) und die dritte Hauptauslassmündung (59) miteinander verbinden und die im Hauptgehäuse (30) untergebracht sind,
∘ einen Nebenkasten (61) mit
▪ einem Nebengehäuse (64), das ein inneres Nebenvolumen (65) begrenzt,
▪ einer Nebeneinlassmündung (66), die mit der dritten Hauptauslassmündung (59) verbunden ist,
▪ einer Nebenauslassmündung (69), die mit dem zweiten Aufbereitungselement (20) verbunden ist,
▪ Drehmoment-Nebenübertragungsmitteln (75), welche die Nebeneinlassmündung (66) und die Nebenauslassmündung (69) miteinander verbinden und die im Nebengehäuse (64) untergebracht sind,
∘ eine Schmierungsvorrichtung (76) des Hauptkastens (29) mit
▪ einem fluiden Schmierstoff,
▪ einer Pumpe (77), die den im Hauptkasten (29) enthaltenen Schmierstoff ansaugt,
▪ einem Hauptverteilungsnetzwerk (79), das mit dem inneren Hauptvolumen (37) kommuniziert und das von der Pumpe (77) mit Schmierstoff versorgt wird, wobei mithilfe dieses Hauptverteilungsnetzwerks (79) der Schmierstoff mindestens in einen Teil der Drehmoment-Hauptübertragungsmittel (42) verteilt wird,
aufweist,
***dadurch gekennzeichnet,* dass** die Schmierungsvorrichtung (76) einerseits ein Nebenverteilungsnetzwerk (80) umfasst, das mit dem inneren Nebenvolumen (65) kommuniziert und über die Pumpe (77) direkt oder indirekt mit Schmierstoff versorgt wird, wobei mithilfe dieses Nebenverteilungsnetzwerks (80) der Schmierstoff mindestens in einen Teil der Drehmoment-Nebenübertragungsmittel (75) verteilt wird, und andererseits ein Rücklaufnetzwerk (81) für den Schmierstoff, der im Nebenkasten (61) enthalten ist, das mit dem inneren Nebenvolumen (65) kommuniziert und dazu dient, diesen Schmierstoff zur Pumpe (77) direkt oder indirekt zurückzuführen.

2. Maschine nach Anspruch 1, ***dadurch gekennzeichnet,* dass** der Übertragungsmechanismus (27) vertikal von einem unteren Hauptende (31) des Hauptgehäuses (30) und von einem oberen Hauptende (32) des Hauptgehäuses (30) begrenzt ist, und dass die Pumpe (77) den Schmierstoff ansaugt, der einen unteren Behälter (82) des Hauptgehäuses (30) füllt, der vertikal nach unten hin von dem unteren Hauptende (31) begrenzt ist.

3. Maschine nach Anspruch 1 oder 2, ***dadurch gekennzeichnet,* dass** der Hauptkasten (29) einen Ablenker (115) umfasst, der im inneren Hauptvolumen (37) zwischen den Drehmoment-Hauptübertragungsmitteln (42) und dem unteren Hauptende (31) angeordnet ist, und dass die Pumpe (77) den Schmierstoff durch eine Öffnung (116) ansaugt, die sich unter dem Ablenker (115) befindet.

4. Maschine nach Anspruch 2 oder 3, ***dadurch gekennzeichnet*, dass** der Schmierstoff während des Betriebs der Maschine (1) zumindest im Wesentlichen zwischen dem unteren und oberen Hauptende (31 und 32) des Hauptgehäuses (30) zirkuliert, und dass zwischen dem oberen Hauptende (32) und dem unteren Behälter (82) das Hauptgehäuse (30) im Wesentlichen frei von Schmierstoff-Rückhaltezonen ist.

5. Maschine nach irgend einem der Ansprüche 1 bis 4, ***dadurch gekennzeichnet*, dass** das Nebengehäuse (64) ein unteres Nebenende (88) umfasst, in dessen Nähe das Rücklaufnetzwerk (81) des Schmierstoffes, der im Nebenkasten (61) enthalten ist, mit dem inneren Nebenvolumen (65) kommuniziert.

6. Maschine nach irgend einem der Ansprüche 1 bis 5, ***dadurch gekennzeichnet*, dass** die Schmierungsvorrichtung (76) einen Speicher (92) umfasst, der mindestens eine Einlassmündung (93) und mindestens eine Auslassmündung (94) umfasst und mit der Pumpe (77) und mit mindestens einem des Haupt- und Nebenverteilungsnetzwerks (79 und 80) verbunden ist.

7. Maschine nach Anspruch 6, ***dadurch gekennzeichnet,* dass** die Einlassmündung (93) des Speichers (92) mit der Pumpe (77) verbunden ist, wobei über die Einlassmündung (93) der Speicher (92) zumindest teilweise mit Schmierstoff gefüllt wird, der von der Pumpe (77) geliefert wird, und dass die Auslassmündung (94) mit mindestens einem des Haupt- und Nebenverteilungsnetzwerks (79 und 80) verbunden ist.

8. Maschine nach Anspruch 6 oder 7, ***dadurch gekennzeichnet*, dass** die Auslassmündung (94) des Speichers (92) einerseits an das Hauptverteilungsnetzwerk (79) angeschlossen ist, wobei über die Auslassmündung (94) Letzteres mit Schmierstoff versorgt wird, und andererseits an das Nebenverteilungsnetzwerk (80), wobei über die Auslassmündung (94) Letzteres mit Schmierstoff versorgt wird.

9. Maschine nach irgend einem der Ansprüche 6 bis 8, ***dadurch gekennzeichnet*, dass** der Speicher (92) durch Überlauf des Schmierstoffes innerhalb des Speichers (92) gefüllt wird, wobei der Überlauf durch eine Überlauflinie (95) definiert wird, und dass sich ein Füllstand des Schmierstoffes innerhalb des Speichers (92) immer auf einem Minimum befindet, das im Wesentlichen gleich ist wie diese Überlauflinie (95).

10. Maschine nach Anspruch 8 und 9, ***dadurch gekennzeichnet*, dass** das Haupt- und Nebenverteilungsnetzwerk (79 und 80) jeweils einen Abschnitt umfassen, der sich auf einer Höhe über dem Boden befindet, die über jener liegt, welche die Überlauflinie (95) aufweist.

11. Maschine nach Anspruch 9, ***dadurch gekennzeichnet*, dass** der Speicher (92) ein Innenvolumen aufweist, das geeignet ist, während des Betriebs der Schmierungsvorrichtung (76) zur Gänze vom Schmierstoff gefüllt zu werden, und dass die Überlauflinie (95) einem Schmierstoffvolumen innerhalb des Speichers (92) entspricht, das einen Großteil dieses Innenvolumens ausmacht.

12. Maschine nach irgend einem der Ansprüche 1 bis 11, ***dadurch gekennzeichnet*, dass** der Übertragungsmechanismus (27) Verbindungsmittel (97) umfasst, die das Nebengehäuse (64) direkt mit dem Hauptgehäuse (30) verbinden.

13. Maschine nach irgend einem der Ansprüche 1 bis 12, ***dadurch gekennzeichnet*, dass** das Nebengehäuse (64) mit dem Hauptgehäuse (30) mittels eines Drehgelenks (102) verbunden ist, das eine Schwenkachse (103) aufweist, die im Wesentlichen mit der geometrischen Achse der Kraftübertragungswelle (68) zusammenfällt, welche die dritte Hauptauslassmündung (59) und die Nebeneinlassmündung (66) miteinander verbindet.

14. Maschine nach irgend einem der Ansprüche 1 bis 13, ***dadurch gekennzeichnet*, dass** das innere Hauptvolumen (37) des Hauptkastens (29) und das innere Nebenvolumen (65) des Nebenkastens (61) mittels einer Schnittstellenzone (106) zueinander in Kommunikation gesetzt werden, welche sie trennt und welche dem Schmierstoff, der im inneren Hauptvolumen (37) oder im inneren Nebenvolumen (65) vorhanden ist, gewährt, sie zu durchfliessen, um zum anderen des inneren Hauptvolumens (37) und inneren Nebenvolumens (65) zu gelangen.

15. Maschine nach Anspruch 14, ***dadurch gekennzeichnet*, dass** sich die Schnittstellenzone (106) gemäß einer zu einer (der) Kraftübertragungswelle (68), welche die dritte Hauptauslassmündung (59) und die Nebeneinlassmündung (66) miteinander verbindet, radialen Richtung von einem Rand (107) dieser Kraftübertragungswelle (68) mindestens zu einer Aufnahme (105) des Haupt- und/oder Nebengehäuses (30, 64), welche die Kraftübertragungswelle (68) aufnimmt, erstreckt.

16. Maschine nach Anspruch 13 und 14, ***dadurch gekennzeichnet*, dass** die Schnittstellenzone (106) mindestens einen Teil der Schwenkmittel (108) umfasst, welche das Drehgelenk (102) zwischen dem Hauptgehäuse (30) und dem Nebengehäuse (64) umfasst, und/oder Schwenkführungsmittel (104) der Kraftübertragungswelle (68) im Hauptgehäuse (30) und/oder Nebengehäuse (64) umfasst.

17. Maschine nach irgend einem der Ansprüche 13, 15 und 16, ***dadurch gekennzeichnet*, dass** die Kraftübertragungswelle (68) eine Hohlwelle ist, in der sich ein Rücklaufmittel (109) erstreckt, das dazu neigt, das zweite Aufbereitungselement (20) dem ersten Aufbereitungselement (19) zu nähern, und dass das Rücklaufmittel (109) einerseits mit einem Gestell (12) der Erntevorrichtung (11) und andererseits mit dem Nebengehäuse (64) verbunden ist.

## Claims

1. Agricultural machine (1) for the harvesting of plants comprising:
- a chassis (2),
- at least one harvesting mechanism (11) connected to the chassis (2) and comprising:
∘ a cutting mechanism (13) comprising cutting elements (14, 14') intended for cutting plants, and
∘ a conditioning device (18) comprising first and second contra-rotating conditioning elements (19 and 20) liable to move away from one another and between which the plants cut by the cutting elements (14, 14') are intended to pass for their treatment,
- a transmission mechanism (27) intended to ensure the driving of the cutting elements (14, 14') and of the first and second conditioning elements (19 and 20), and comprising:
∘ a primary box (29) comprising:
▪ a primary casing (30) delimiting a primary inner volume (37),
▪ an input shaft (38) provided to be set in motion from a power source,
▪ a first primary output (52) connected to the cutting mechanism (13),
▪ a second primary output (56) connected to the first conditioning element (19),
▪ a third primary output (59),
▪ primary torque transmission means (42) connecting with one another the input shaft (38), the first primary output (52), the second primary output (56) and the third primary output (59), and housed within the primary casing (30),
∘ a secondary box (61) comprising:
▪ a secondary casing (64) delimiting a secondary inner volume (65),
▪ a secondary input (66) connected to the third primary output (59),
▪ a secondary output (69) connected to the second conditioning element (20),
▪ secondary torque transmission means (75) connecting with one another the secondary input (66) and the secondary output (69), and housed within the secondary casing (64),
∘ a lubrication device (76) for the primary box (29) comprising:
▪ a fluid lubricant,
▪ a pump (77) sucking up the lubricant contained in the primary box (29),
▪ a primary distribution system (79) communicating with the primary inner volume (37) and supplied with lubricant by the pump (77), by means of which primary distribution system (79) the lubricant is distributed towards at least part of the primary torque transmission means (42),
***characterized in* that** the lubrication device (76) comprises on the one hand a secondary distribution system (80), which communicates with the secondary inner volume (65) and is supplied with lubricant, directly or indirectly, by the pump (77), by means of which secondary distribution system (80) the lubricant is distributed towards at least part of the secondary torque transmission means (75), and on the other hand a return system (81) for the lubricant contained in the secondary box (61), which communicates with the secondary inner volume (65) and is intended to return, directly or indirectly, this lubricant towards the pump (77).

2. Machine according to Claim 1, ***characterized in* that** the transmission mechanism (27) is vertically delimited by a lower primary end (31) of the primary casing (30) and by an upper primary end (32) of the primary casing (30), and that the pump (77) sucks up the lubricant filling a lower pocket (82) of the primary casing (30) delimited vertically, at the bottom, by the said lower primary end (31).

3. Machine according to Claim 1 or 2, ***characterized in* that** the primary box (29) comprises a deflector (115) arranged, within the primary inner volume (37), between the primary torque transmission means (42) and the lower primary end (31), and that the pump (77) sucks up the lubricant through an orifice (116) situated beneath the deflector (115).

4. Machine according to Claim 2 or 3, ***characterized in* that** during the operation of the machine (1), the lubricant circulates, at least substantially, between the lower and upper primary ends (31 and 32) of the primary casing (30), and that between the upper primary end (32) and the lower pocket (82), the primary casing (30) is substantially free of retention zones of the lubricant.

5. Machine according to any one of Claims 1 to 4, ***characterized in* that** the secondary casing (64) comprises a lower secondary end (88) in the vicinity of which the return system (81) for the lubricant contained in the secondary box (61) communicates with the secondary inner volume (65).

6. Machine according to any one of Claims 1 to 5, ***characterized in* that** the lubrication device (76) comprises a reservoir (92) comprising at least one input (93) and at least one output (94), and is connected to the pump (77) and to at least one of the primary and secondary distribution systems (79 and 80).

7. Machine according to Claim 6, ***characterized in* that** the input (93) of the reservoir (92) is connected to the pump (77), by which input (93) the reservoir (92) is, at least partially, filled by the lubricant sent by the pump (77), and that the output (94) is connected to at least one of the primary and secondary distribution systems (79 and 80).

8. Machine according to Claim 6 or 7, ***characterized in* that** the output (94) of the reservoir (92) is connected, on the one hand, to the primary distribution system (79), by which output (94) this latter is supplied with lubricant, and on the other hand to the secondary distribution system (80), by which output (94) this latter is supplied with lubricant.

9. Machine according to any one of Claims 6 to 8, ***characterized in* that** the reservoir (92) is filled by overflow of the lubricant inside of the reservoir (92), which overflow is defined by an overflow level (95), and that a level of lubricant inside of the reservoir (92) is always as a minimum substantially equal to this overflow level (95).

10. Machine according to Claims 8 and 9, ***characterized in* that** the primary and secondary distribution systems (79 and 80) each comprise a portion situated at a height above the ground greater than that which is presented by the overflow level (95).

11. Machine according to Claim 9, ***characterized in* that** the reservoir (92) has an inner volume liable to be totally filled by the lubricant during the operation of the lubrication device (76), and that the overflow level (95) corresponds to a volume of lubricant inside of the reservoir (92) representing a large part of this inner volume.

12. Machine according to any one of Claims 1 to 11, ***characterized in* that** the transmission mechanism (27) comprises connecting means (97) which directly connect the secondary casing (64) to the primary casing (30).

13. Machine according to any one of Claims 1 to 12, ***characterized in* that** the secondary casing (64) is connected to the primary casing (30) by means of a pivoting connection (102) having a pivoting axis (103) substantially coincident with the geometric axis of a transmission shaft (68) connecting between them the third primary output (59) and the secondary input (66).

14. Machine according to any one of Claims 1 to 13, ***characterized in* that** the primary inner volume (37) of the primary box (29) and the secondary inner volume (65) of the secondary box (61) are set in communication with one another by means of an interface zone (106) which separates them and which allows the lubricant present in the primary inner volume (37) or the secondary inner volume (65), to pass through the interface zone to rejoin the other of the said primary inner volume (37) and secondary inner volume (65).

15. Machine according to Claim 14, ***characterized in* that** the interface zone (106) extends, along a direction radial to a (the) transmission shaft (68) connecting between them the third primary output (59) and the secondary input (66), from a periphery (107) of this transmission shaft (68) towards at least one housing (105) of the primary and/or secondary casings (30, 64) which accommodates the transmission shaft (68).

16. Machine according to Claims 13 and 14, ***characterized in* that** the interface zone (106) comprises at least part of the pivoting means (108) which the pivoting connection (102) comprises between the primary casing (30) and the secondary casing (64), and/or comprises means (104) configured to guide in rotation the transmission shaft (68) in the primary casing (30) and/or the secondary casing (64).

17. Machine according to any one of Claims 13, 15 and 16, ***characterized in* that** the transmission shaft (68) is a hollow shaft inside of which a return means (109) extends, which tends to bring the second conditioning element (20) close to the first conditioning element (19), and that the return means (109) is connected on the one hand to a frame (12) of the harvesting mechanism (11), and on the other hand to the secondary casing (64).
